(19) **Europäisches Patentamt / European Patent Office / Office européen des brevets**

(11) **EP 4 407 286 A1**

(12) # EUROPEAN PATENT APPLICATION

(43) Date of publication:
**31.07.2024 Bulletin 2024/31**

(21) Application number: **24179474.2**

(22) Date of filing: **03.06.2024**

(51) International Patent Classification (IPC):
**G01J 5/00** *(2022.01)*    **G01J 5/04** *(2006.01)*
**G01J 5/12** *(2006.01)*    **G01K 13/20** *(2021.01)*
**G01K 7/42** *(2006.01)*

(52) Cooperative Patent Classification (CPC):
**G01K 7/427; G01J 5/0025; G01J 5/045; G01J 5/12;
G01K 13/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Melexis Technologies NV
3980 Tessenderlo (BE)**

(72) Inventors:
• **VAN BUGGENHOUT, Carl
8900 Ieper (BE)**
• **BUYDENS, Luc
3980 Tessenderlo (BE)**
• **REEKMANS, Stijn
3980 Tessenderlo (BE)**
• **VAN DAELE, Benny
3980 Tessenderlo (BE)**
• **VAN THIENEN, Jietse
3980 Tessenderlo (BE)**
• **TERRYN, Dirk
3980 Tessenderlo (BE)**

(74) Representative: **Kay, Ross Marcel
Laudens
Blackwell House
Guildhall Yard
London EC2V 5AE (GB)**

(54) **HEAT FLUX SENSOR DEVICE AND METHOD OF MANUFACTURE THEREOF**

(57) A heat flux sensor device (100) comprising a semiconductor substrate layer (104) and a cap layer (102) that has a substrate-facing side (106) and a reception side (108). The cap layer (102) is bonded on the substrate-facing side (106) to the substrate layer (104), and the substrate layer (104) and the cap layer (102) together defining a first cavity (116). A first thermal sensor element (120, 122) is disposed within the first cavity (116) and configured to translate thermal energy proportional to a temperature difference between the cap layer (102) and the substrate layer (104) into first electrical energy. Signal processing circuitry is provided operably coupled to the first thermal sensor element (120, 122) and configured to use the first electrical energy generated by the first thermal sensor element (120, 122) to measure a heat flux flowing from the cap layer (102) to the substrate layer (104). The first cavity (116) is opaque to infrared electromagnetic radiation incident from the reception side (108) of the cap layer (102).

FIG. 1

EP 4 407 286 A1

**Description**

The present invention relates to a thermal sensor device of the type that, for example, comprises a pair of thermal sensors defined by a semiconductor substrate layer and a cap layer. The present invention also relates to a method of measuring a heat flux, the method being of the type that, for example, comprises sensing thermal energy using a first thermal sensor and a second thermal sensor.

In some circumstances, it is desirable to measure core temperature of a body, for example a human body. The most reliable way of measuring core temperature is by way of a pulmonary artery measurement technique or other invasive techniques, such as oesophageal, rectal or bladder measurement techniques. However, in addition to being invasive, these are sometimes uncomfortable and/or embarrassing for the patient, but also the procedure is usually only performed in a medical setting, for example at a doctor's surgery or in a hospital and for clinical purposes. Other ways of measuring core temperature exist, for example sublingually, but reduced precision and result variation are factors that affect the ability to rely on results obtained by such measurement techniques.

Personal wearable electronic devices (so-called "wearables") are typically, but not exclusively, used to provide a user with a variety of functionality, ranging from basic timekeeping and chronography to tracking of lifestyle parameters, for example time spent exercising and number of steps taken throughout a day. However, such devices are increasingly being fitted with different sensors to measure a variety of health-related parameters, for example heart rate, heart rhythm, blood oxygen level, and sleep quality and duration, and most notably herein temperature. These measured parameters are increasingly, in some cases, being used to perform medical functions, so much so that some of these wearable electronic devices are now classed as medical devices.

Core temperature measurement is one such parameter that can be used, if known, to report to a user of potential medical conditions, as well as possibly assist in the adjustment of operational parameters of the wearable device in order to maintain optimal performance of the wearable device in the light of a current core temperature of the user. In this regard, it is known to provide wearable electronic devices with a temperature sensor, which can measure the temperature of the skin of the wearer, but as described above, the measurement of core body temperature is more challenging and typically not sufficiently precise and consistent to be considered reliable. Without such reliability, the risk exists of false alarms, or events being overlooked by the wearable device.

In the field of thermal sensors, it is known to form a chamber to contain a thermal sensor element. A first wafer defines one half of the shape of a plurality of chambers, and a second wafer defines another half of the shape of the plurality of chambers. When the two wafers are brought together, the plurality of chambers is formed. One wafer typically comprises CMOS devices and Micro-electromechanical Systems (MEMS) thermal sensing elements, and the other wafer typically serves as a cap or lid.

Some thermal sensing elements in the chambers are known to operate in a vacuum and so the chambers are emptied of gasses so as to form the vacuum in the chambers. The abutted two wafers are therefore bonded together using a suitable bonding process that ensures that the chambers are hermetically sealed. These thermal sensing elements can be grouped in pairs or greater numbers within a common internal atmosphere to form a thermal sensor device, which is "singulated" and packaged individually during the semiconductor manufacturing process. However, these thermal sensor devices are configured to measure surface temperature of a body and not core temperature. Indeed, US patent publication no. 2023/066222 A1, explains that body core temperature cannot be deduced from only measuring temperature of the skin.

A number of known techniques exist for measurement of core body temperature of a user wearing a thermal sensor that is not in contact with tissue at the body core temperature, i.e. external to the body, using available thermal sensor elements. For example, US 2023/066222 A1 mentioned above proposes use of a first temperature sensor separated from a second temperature sensor by an insulating material of known thermal conductivity. One of the two temperature sensors is near or in contact with the skin of the body to be measured. The measurements of the two sensors are used to calculate heat flux and used with a sensor measurement nearest the skin to deduce the body core temperature. However, such a measurement apparatus and technique does not provide an instantaneous response to changes in the skin temperature when the body core temperature has changed.

According to a first aspect of the present invention, there is provided a heat flux sensor device comprising: a semiconductor substrate layer; a cap layer having a substrate-facing side and a reception side, the cap layer being bonded on the substrate-facing side thereof to the semiconductor substrate layer, and the semiconductor substrate layer and the cap layer together defining a first cavity; a first thermal sensor element disposed within the first cavity and configured to translate, when in use, thermal energy proportional to a temperature difference between the cap layer and the semiconductor substrate layer into first electrical energy; and signal processing circuitry operably coupled to the first thermal sensor element and configured to use the first electrical energy generated, when in use, by the first thermal sensor element to measure a heat flux flowing from the cap layer to the semiconductor substrate layer; wherein the first cavity is opaque, when in use, to infrared electromagnetic radiation incident from the reception side of the cap layer.

The semiconductor substrate layer may define the signal processing circuitry.

The first thermal sensor element may be operably coupled to the semiconductor substrate layer.

The device may further comprise: a substrate temperature sensor operably coupled to the semiconductor substrate layer.

The substrate temperature sensor may be configured to measure, when in use, an absolute temperature of the semiconductor substrate layer.

The first thermal sensor element may be disposed in a plane substantially parallel with the semiconductor substrate layer and the cap layer.

According to a second aspect of the present invention, there is provided a core temperature measurement apparatus comprising a heat flux sensor device as set forth above in relation to the first aspect of the present invention. The apparatus may comprise a data store configured to record a first thermal resistance value of the heat flux sensor device and a second thermal resistance value of a sample to be tested.

The sample being measured may be a portion of a body, for example a human body. The sample may be in vivo.

The signal processing circuitry may be configured to retrieve and use the first and second thermal resistance values stored in conjunction with the first electrical energy generated in order to measure a core temperature of a body.

According to a third aspect of the present invention, there is provided a thermal sensor device comprising: the heat flux sensor device as set forth above in relation to the first aspect of the present invention; wherein the semiconductor substrate layer and the cap layer together define a second cavity; and further comprising: a first infrared electromagnetic radiation sensor comprising the second cavity and a second thermal sensor element disposed in the second cavity, the second thermal sensor element being configured to translate thermal energy into second electrical energy.

The second cavity may comprise an aperture located opposite the second thermal sensor element.

The signal processing circuitry may be configured to use the first electrical energy generated by the first thermal sensor element to compensate for parasitic thermal fluxes measured by the first infrared electromagnetic radiation sensor.

The second cavity may be opaque, when in use, to infrared electromagnetic radiation incident from the reception side of the cap layer.

The semiconductor substrate layer and the cap layer together may define a third cavity; and the device may further comprise: a second infrared electromagnetic radiation sensor comprising the third cavity and a third thermal sensor element disposed in the third cavity; the third thermal sensor element may be configured to translate thermal energy into third electrical energy; and the third cavity may be opaque, when in use, to infrared electromagnetic radiation incident from the reception side of the cap layer.

The signal processing circuitry may be configured to use the third electrical energy generated by the third thermal sensor element to compensate for parasitic thermal fluxes measured by the first infrared electromagnetic radiation sensor.

The thermal energy may be proportional to the temperature difference between the cap layer and the semiconductor substrate layer; the second thermal sensor element may be operably coupled to the signal processing circuitry; and the signal processing circuitry may be configured to use the second electrical energy generated by the second thermal sensor element, when in use, to measure the heat flux flowing from the cap layer to the semiconductor substrate layer.

The thermal energy may be proportional to the temperature difference between the cap layer and the semiconductor substrate layer; the third thermal sensor element may be operably coupled to the signal processing circuitry; and the signal processing circuitry may be configured to use the third electrical energy generated by the third thermal sensor element, when in use, to measure the heat flux flowing from the cap layer to the semiconductor substrate layer.

The semiconductor substrate layer and the cap layer may cooperate to define a hermetic local environment; and the hermetic local environment may be maintained at a predetermined pressure.

The first cavity may be within and in fluid communication with the hermetic local environment.

The second cavity may be within and in fluid communication with the hermetic local environment.

The third cavity may also be within and in fluid communication with the hermetic local environment.

The semiconductor substrate layer and the cap layer may cooperate to define a first hermetic local environment and a second hermetic local environment; the first hermetic local environment may be maintained at a first predetermined pressure and the second hermetic local environment may be maintained at a second predetermined pressure; the second hermetic local environment may be separate and independent from the first hermetic local environment; the first cavity may be within and in fluid communication with the first hermetic local environment; and the second cavity may be within and in fluid communication with the second hermetic local environment.

The third cavity may also be within and in fluid communication with the second hermetic local environment.

The second predetermined pressure may be lower than the first predetermined pressure.

The second predetermined pressure may be a near-vacuum. The second predetermined pressure may be less than a pressure corresponding to a first inflexion point of a first sensitivity curve associated with the first infrared electromagnetic radiation sensor. The second predetermined pressure may be less than 1 mbar.

The first predetermined pressure may be within a range of pressures to ensure thermal conductive heat transfer within the first cavity. The first predetermined pressure may be greater than a pressure corresponding to a second inflexion point of a second sensitivity curve associated with the heat flux sensor device. The second predetermined pressure may be greater than 10mbar.

The heat flux sensor device and the first infrared electromagnetic radiation sensor may be formed in accordance with a plurality of common structural constraints; and a first value of a common structural constraint of the plurality of common structural constraints in respect of the heat flux sensor device may be different from a second value of the same common structural constraint in respect of the first infrared electromagnetic radiation sensor.

The structural constraint may be a cavity internal volume. The structural constraint may be a quantity of thermocouple elements.

The structural constraint may be a respective depth of a recess in the cap layer in respect of the first cavity of the heat flux sensor device and the second cavity of the first infrared electromagnetic radiation sensor.

The heat flux sensor device may be provided to detect a pressure change in the first local hermetic environment.

The core temperature measurement apparatus may further comprise: the thermal sensor device as set forth above in relation to the third aspect of the invention; wherein the signal processing circuitry may be configured to measure, when in use, the first and second electrical energy and use the measures of the first and second electrical energy to calculate a core temperature.

According to a fourth aspect of the present invention, there is provided a thermal sensor module comprising: a package containing the thermal sensor device as set forth above in relation to the first aspect of the present invention, wherein the package comprises a module cover opposite the reception side of the cap layer.

The module may further comprise a layer of thermal interface material disposed between the reception side of the cap layer and the module cover. The layer of thermal interface material may be transmissive to infrared electromagnetic radiation.

The layer of thermal interface material may comprise an access aperture opposite the first infrared electromagnetic radiation sensor.

The module may further comprise another layer of thermal interface material. The another layer of thermal interface material may be transmissive to infrared electromagnetic radiation. The another layer of thermal interface material may be disposed between the layer of thermal interface material and the cap layer. The another layer of thermal interface material may comprise another access aperture in registry with the access aperture. The another access aperture may be smaller than the access aperture.

According to a fifth aspect of the present invention, there is provided a method of manufacturing a heat flux sensor device comprising: providing a semiconductor substrate layer; providing a cap layer having a substrate-facing side and a reception side; forming a first thermal sensor element and a first recessed part of a first cavity in the semiconductor substrate layer, the first thermal sensor element being configured to translate, when in use, thermal energy proportional to a temperature difference between the cap layer and the semiconductor substrate layer into first electrical energy; bonding the cap layer on the substrate-facing side thereof to the semiconductor substrate layer, the first recessed part of the first cavity in the semiconductor substrate layer and the cap layer together defining the first cavity containing the first thermal sensor element; and providing signal processing circuitry operably coupled to the first thermal sensor element and configured to use the first electrical energy generated, when in use, by the first thermal sensor element to measure a heat flux flowing from the cap layer to the semiconductor substrate layer; wherein the first cavity is opaque, when in use, to infrared electromagnetic radiation incident from the reception side of the cap layer.

The method may comprise the signal processing circuitry performing a calibration process to determine a sensitivity value of the heat flux sensor device.

The method may comprise forming a second recessed part of the first cavity in the substrate-facing side of the cap layer.

According to a sixth aspect of the present invention, there is provided a method of measuring a heat flux, the method comprising: providing a heat flux sensor device as set forth in accordance with the first aspect of the present invention; offering the heat flux sensor device up to a sample under test; generating the first electrical energy in response to the thermal energy being incident upon the reception side of the cap layer; and using the first electrical energy generated to measure a heat flux flowing from the cap layer to the semiconductor substrate layer.

According to a seventh aspect of the present invention, there is provided a method of measuring a core temperature of a sample under test, the method comprising providing a measurement device comprising a thermal sensor device as set forth above in accordance with the third aspect of the present invention and constituting a thermal system; wherein the heat flux sensor device and the first infrared electromagnetic radiation sensor are formed in accordance with a common structural constraint of different value; the signal processing circuitry performing a sensor calibration process in respect of the sample under test in order to determine a thermal sensitivity of the thermal system; and the signal processing circuitry calculating a core temperature of the sample under test using the first electrical energy, the second electrical energy, a first thermal resistance value of a boundary layer of the sample under test and a predetermined thermal resistance value of the heat flux sensor device or a thermal sensor module containing the heat flux sensor device.

It is thus possible to provide a device and method that enables core body temperature to be measured without the need for invasive interventions. The apparatus and method also lend themselves well to being incorporated into wearable devices, for example watches and earbuds. Additionally, the manufacturing process employed to fabricate a thermal sensor for measuring irradiated infrared electromagnetic radiation directly can also be employed to form the heat flux sensor with little or no modification to the processing steps. As such, when configured additionally to measure temperature, an integrated contactless infrared temperature sensor with a heat flux sensor can be provided that can be used to measure a core body temperature by using the infrared sensor to measure the temperature of the skin and the heat flux sensor to measure received heat flux. However, the combined device is also capable of providing remote temperature sensing to measure an object temperature at a distance. In examples where the heat flux sensor is employed in combination with an infrared electromagnetic radiation sensor, the resulting combined device that integrates both sensors in a single device yields a particularly cost-effective device.

At least one embodiment of the invention will now be described, by way of example only, with reference to the accompanying drawings, in which:

Figure 1 is a schematic diagram of a first thermal sensor device constituting an embodiment of the invention;

Figure 2 is a schematic diagram of a second thermal sensor device constituting another embodiment of the invention;

Figure 3 is a schematic diagram of a third thermal sensor device constituting another embodiment of the invention;

Figure 4 is a schematic diagram of a first clustered arrangement of sensors of the third thermal sensor device of Figure 3 constituting a further embodiment of the invention;

Figure 5 is a schematic plan view of a second clustered arrangement of a fourth thermal sensor device constituting yet another embodiment of the invention;

Figure 6 is a schematic cross-sectional view of the second clustered arrangement of Figure 5 along the line B-B;

Figure 7 is a schematic diagram in plan view of a third clustered arrangement of the third thermal sensor device of Figure 3 constituting another embodiment of the invention;

Figure 8 is a schematic diagram of a fourth thermal sensor device constituting yet a further embodiment of the invention;

Figure 9 is a flow diagram of a method of manufacturing the thermal sensor devices of Figures 1 to 8;

Figure 10 is a flow diagram of a method of measuring heat flux;

Figure 11 is a schematic diagram of a model of heat transfer from a sample under test to the thermal sensor devices of Figures 3 to 8;

Figure 12 is a flow diagram of a method of measuring a core temperature;

Figure 13 is a graph of respective sensitivities versus cavity pressure of a heat flux sensor and an infrared electromagnetic radiation sensor, respectively;

Figure 14 is a schematic diagram of an application module comprising the third thermal sensor device of Figure 3 and constituting another embodiment of the invention;

Figure 15 is a schematic diagram of another application module comprising the third thermal sensor device of Figure 3 and constituting a further embodiment of the invention; and

Figure 16 is a schematic diagram of a further application module comprising the third thermal sensor device of Figure 3 and constituting yet another embodiment of the invention.

Throughout the following description, identical reference numerals will be used to identify like parts.

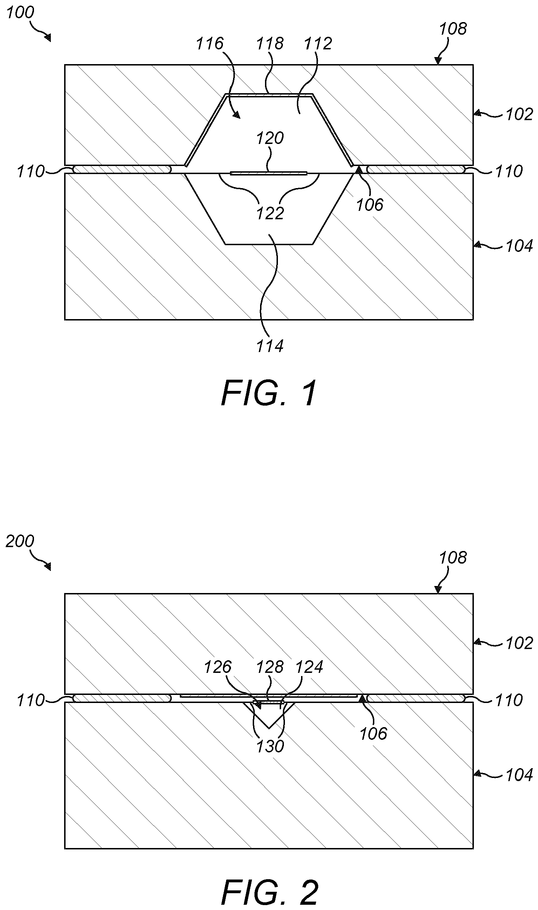

Referring to Figure 1, a first heat flux sensor 100, which is a first kind of thermal sensor device, comprises a cap layer 102 and a substrate layer 104, sometimes referred to as a CMOS (Complementary Metal Oxide Semiconductor) layer. The cap layer 102 has a substrate-facing side 106 and a reception side 108. The substrate-facing side 106 of the cap layer 102 is bonded to the substrate layer 104 using a peripheral hermetic sealing material, for example fused glass 110, or a eutectic, such as a gold/tin (AuSn) alloy, an Aluminium/Germanium (AlGe) alloy or any other suitable wafer bonding material. The cap layer 102 comprises a first recess 112 and the substrate layer 104 comprises a second recess 114. The first and second recesses 112, 114 are located respectively within the cap layer 102 and the substrate layer 104 so that when the cap layer 102 and the substrate layer 104 are brought together, the first and second recesses 112, 114 are substantially in registry and define a first cavity 116. It should be noted that the dimensions of the first and the second recesses 112, 114 do not have to be identical. In this example, the first heat flux sensor device 100 is "blind", meaning that the first cavity 116 is opaque to infrared electromagnetic radiation incident upon the reception side 108 of the cap layer 102. The substrate-facing side 106 of the first recess 112 is lined with a layer of opaque material 118, for example Aluminium or Titanium. The material of the layer of opaque material 118 can also be selected to serve as a getter in order to sorb unwanted gasses out of the first cavity 116. Some suitable materials that can be employed to getter molecules, particularly but not exclusively hydrogen molecules, include: Calcium, Strontium, Barium, Zirconium, Thorium, or getter alloys like such as Zirconium -Aluminium, Zirconium-Iron, Zirconium-Nickel, Zirconium-Vanadium-Iron, Manganese-Rhenium, Yttrium-Vanadium, Yttrium-Manganese-Aluminium, or Rare-earth alloys such as Zirconium-Vanadium-Iron-Manganese-RE, Zirconium-Cobalt-RE.

The substrate layer 104 comprises a first thermal sensor element, for example a first thermopile sensor structure, formed from a first thermally conductive membrane 120 suspended over the second recess 114 by a first set of beams 122. In this regard, the first set of beams 122 can comprise two or more beams, but in other examples a single beam, for example a cantilever suspended beam, can be employed. In other examples, the first thermal sensor element need not be a thermopile, but can be a single thermocouple or any other kind of thermally sensitive element capable of translating thermal energy to electrical energy, for example a bolometer. The first thermal sensor element is in a plane that is parallel with the cap layer 102 and the substrate layer 104. In this regard, the first thermal sensor element is perpendicular to the direction of, and can measure, vertical heat fluxes.

In order to process signals generated by the first thermopile sensor structure, the substrate layer 104 comprises, in this example, signal processing circuitry, for example an integrated circuit formed in and/or on the substrate layer 104. However, it will be appreciated by the skilled person that the substrate layer 104 need not comprise the signal processing circuitry and the signal processing circuitry can be provided elsewhere, for example on a separate die.

The first heat flux sensor 100 can be employed in a core temperature measurement apparatus. In such an apparatus, a data store, for example a memory, such as a digital memory, can be provided in order to record, for subsequent retrieval, a first thermal resistance value of the first heat flux sensor 100 and a second thermal resistance value of a sample to be tested. In such an apparatus, the data store can be supported by the signal processing circuitry employed to support measurement by the first thermopile sensor structure.

The structure of the first heat flux sensor 100 facilitates manufacture in a like manner to other pixels of a thermal sensor device where it is desirable to compensate for parasitic heat fluxes in a corresponding associated live pixel of a thermal sensor device comprising multiple thermal sensors and capable of sensing infrared electromagnetic radiation. However, performance in respect of heat flux measurement can be enhanced by employing a different structure to form the heat flux sensor. In this regard, and referring to Figure 2, a second heat flux sensor 200, which is a second kind of thermal sensor device, comprises the cap layer 102 and the substrate layer 104. The cap layer 102 has the substrate-facing side 106 and the reception side 108. The substrate-facing side 106 of the cap layer 102 is bonded to the substrate layer 104 using fused glass 110. The cap layer 102, in this example, is not recessed, but in other examples can possess a shallow third recess. The substrate layer comprises a fourth recess 124. Where the optional third recess is provided, the third recess is shallower than the fourth recess 124 of the second heat flux sensor 200. When the cap layer 102 and the substrate layer 104 are brought together, the substrate-facing side 106 of the cap layer 102 opposite and fourth recess 124 define a second cavity 126. In this example, the second heat flux sensor 200 is also "blind". The substrate-facing side 106 of the second heat flux sensor 200, optionally comprising the third recess is, in this example, also lined with a layer of opaque material, for example the layer of getter material 118 of the type mentioned above in relation to Figure 1. This kind of thermal sensor device can also be used, if desired, to measure pressure of gas in the second cavity 126 and therefore a pressure change.

The substrate layer 104 comprises a second thermal sensor element, for example a second thermopile sensor structure, formed from a second thermally conductive membrane 128 suspended over the fourth recess 124 by a second set of beams 130. In this regard, the second set of beams 130 can comprise two or more beams, but in other examples a single beam, for example a cantilever suspended beam, can be employed. In other examples, the second thermal sensor element need not be a thermopile, but can be a single thermocouple or any other kind of thermally sensitive element capable of translating thermal energy to electrical energy, for example a bolometer. The second thermal sensor element is in a plane that is parallel with the cap layer 102 and the substrate layer 104. In this regard, the second thermal sensor element is perpendicular to the direction of, and can measure, vertical heat fluxes.

In order to process signals generated by the second thermopile sensor structure, the substrate layer 104 again comprises signal processing circuitry, for example an integrated circuit formed in and/or on the substrate layer 104. However, it will be appreciated by the skilled person that the substrate layer 104 need not comprise the signal processing circuitry and the signal processing circuitry can be provided elsewhere, for example on a separate die.

The second heat flux sensor 200 can be employed in a core temperature measurement apparatus. In such an apparatus, a data store, for example a memory, such as a digital memory, can be provided in order to record, for subsequent retrieval, a first thermal resistance value of the second heat flux sensor 200 and a second thermal resistance value of a sample to be tested. In such an apparatus, the data store can be supported by the signal processing circuitry employed to support measurement by the second thermopile sensor structure.

In the above examples, the first and second heat flux sensors 100, 200 comprise a hermetic local environment, constituting an internal atmosphere bounded by the peripheral fused glass 110 or any other suitable hermetic sealing material, is maintained at a predetermined pressure, which is not a vacuum. The purpose of maintaining the predetermined pressure is to ensure thermal conductive heat transfer dominates the heat transfer, when in use, between the cap layer 102 and the first thermally conductive membrane 120 or the second thermally conductive membrane 128, the first thermally conductive membrane 120 or the second thermally conductive membrane 128 only being exposed to the cap layer 102. As the skilled person will appreciate, this internal pressure can be achieved by backfilling the hermetic local environment during wafer bonding with a predetermined gas, for example Nitrogen or Argon any other suitable gas at a predetermined gas pressure.

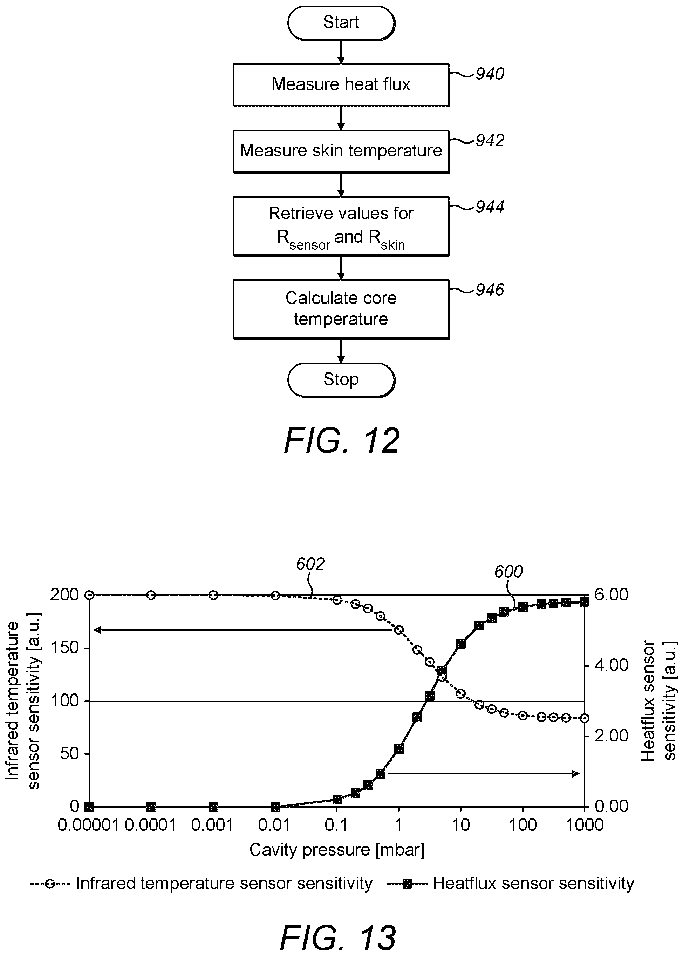

Referring to the graph of Figure 13, in particular a first S-curve 600 of the sensitivity of the heat flux sensor charted against pressure, it can be seen that the sensitivity of the first and second heat flux sensors 100, 200 is best when pressure of the hermetic local environment is highest. As such, the skilled person will appreciate that for the backfill pressure of these heat flux sensors delivers optimum performance between pressures of about 1mbar and about 1bar. Indeed, a pressure greater than about 10mbar supports better performance than a backfill pressure of about 1 mbar and a backfill pressure of greater than about 100mbar supports better sensitivity than pressures between 10mbar and 100mbar. Indeed, pressures greater than about 700mbar can be employed. However, as will be seen in later examples, there is sometimes a trade-off between the predetermined pressure supporting a heat flux sensor and an infrared electromagnetic radiation sensor. It should also be appreciated that the pressures at which optimum sensitivity occurs can vary depending upon the shape of the first sensitivity curve 600 and, in some examples, an infection point of the first sensitivity curve 600 can be used as a location to identify pressures above which the heat flux sensor possesses desirable levels of sensitivity.

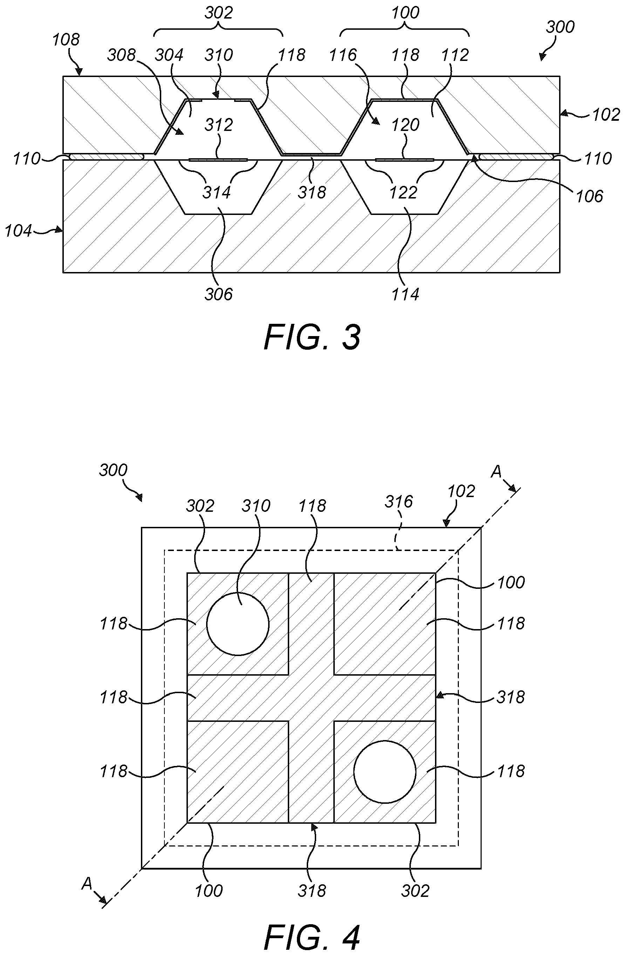

Turning to Figure 3, in another example, a third thermal sensor device 300 can comprise the first heat flux sensor 100 accompanied by an infrared electromagnetic radiation sensor 302. The electromagnetic radiation sensor 302 is, in this example, of a similar construction as the first heat flux sensor 100. However, instead of being opaque to infrared electromagnetic radiation incident upon the reception side 108 of the cap layer 102, when in use, the cavity of the infrared electromagnetic radiation sensor 302 comprises an aperture or "window" through which electromagnetic radiation can propagate.

In this regard, to supplement the first heat flux sensor 100, the cap layer 102 comprises a fifth recess 304 and the substrate layer 104 comprises a sixth recess 306. The fifth and sixth recesses 304, 306 are located respectively within the cap layer 102 and the substrate layer 104 so that when the cap layer 102 and the substrate layer 104 are brought together, the fifth and sixth recesses 304, 306 are also substantially in registry and define a third cavity 308. In this example, in contrast with the first heat flux sensor 100, which is "blind", the infrared electromagnetic radiation sensor 302 is "live" and comprises an aperture or window 310 to permit infrared electromagnetic radiation incident upon the reception side 108 of the cap layer 102 to enter the third cavity 308. As with the first heat flux sensor 100 of Figure 1, the substrate-facing side 106 of the fifth recess 304 is lined with the layer of the opaque material, for example the layer of getter material 118, with an absence of the opaque material in the fifth recess 304 to form the window 310, the material from which the cap layer 102 is formed being transmissive to infrared electromagnetic radiation. In this example, the getter material 118 is of the type mentioned above in relation to Figure 1.

The substrate layer 104 comprises a third thermal sensor element, for example a third thermopile sensor structure, formed from a third thermally conductive membrane 312 suspended over the sixth recess 306 by a third set of beams 314. In this regard, the third set of beams 314 can comprise two or more beams, but in other examples a single beam, for example a cantilever suspended beam, can be employed. In other examples, a single thermocouple or any other kind of thermally sensitive element capable of translating thermal energy to electrical energy, for example a bolometer, can be used in place of the third thermopile structure.

As in the previous examples, in order to process signals generated by the first thermopile sensor structure of the first heat flux sensor 100 and the third thermopile sensor structure of the infrared electromagnetic radiation sensor 302, the substrate layer 104 again comprises signal processing circuitry, for example an integrated circuit formed in and/or on the substrate layer 104. However, it will be appreciated by the skilled person that the substrate layer 104 need not comprise the signal processing circuitry and the signal processing circuitry can be provided elsewhere, for example on a separate die.

The third thermal sensor device 300 can be employed in a core temperature measurement apparatus. In such an apparatus, a data store, for example a memory, such as a digital memory, can be provided in order to record, for subsequent retrieval, a first thermal resistance value of the instance of the first heat flux sensor 100 and a second thermal resistance value of a sample to be tested. In such an apparatus, the data store can be supported by the signal processing circuitry employed to support measurement by the first thermopile sensor structure.

In this example, the fused glass 110 defines a periphery of the hermetic internal environment, which can be maintained at the predetermined pressure. Referring again to Figure 13, the sensitivity performance of the infrared electromagnetic radiation sensor 302 is shown by a second S-curve 602 whose shape is substantially in opposition to the first S-curve 600 of the sensitivity of the heat flux sensor, i.e. sensitivity of the infrared electromagnetic radiation sensor 302 is greatest at lower pressures of the first hermetic internal environment and lowest at higher pressures of the first hermetic internal environment. As the first heat flux sensor 100 and the infrared electromagnetic radiation sensor 302 of the third thermal sensor device 300 share the hermetic internal environment, it is desirable to set the predetermined pressure within the hermetic internal environment to a value that is a compromise between the sensitivity requirements of the infrared electromagnetic radiation sensor 302 and the first heat flux sensor 100, for example more than about 1mbar, or greater than about 10mbar or even greater than about 100mbar or greater than about 700mbar. It should again also be appreciated that the pressures at which optimum sensitivity occurs can vary depending upon the shape of the second sensitivity curve 602 and, in some examples, an infection point of the second sensitivity curve 602 can be used as a location to identify pressures below which the infrared electromagnetic radiation sensor 302 possesses desirable levels of sensitivity.

Referring to Figure 4, the infrared electromagnetic radiation sensor 302 and the first heat flux sensor 100 can be formed in pairs sealed within the hermetic local environment 316 as a cluster of sensors. The sensors forming the third thermal sensor device 300, for example the first heat flux sensor 100 and the infrared electromagnetic radiation sensor 302, are all in fluid communication with each other by virtue of passageways 318 between the sensors (see also Figure 3).

In such an embodiment employing the infrared electromagnetic radiation sensor 302 and the first heat flux sensor 100, the first heat flux sensor 100 can also be employed to compensate for parasitic thermal heat fluxes as well as measure vertical heat fluxes from the cap layer 102 to the substrate layer 104.

Where the first heat flux sensor 100 has a primary purpose of measuring vertical heat fluxes, a structural constraint of the first heat flux sensor 100 can be selected to optimise performance of the first heat flux sensor 100 for sensing heat fluxes, for example a recess depth, cavity internal volume or a number of thermocouple elements. As the first heat flux sensor 100 has a like construction to the infrared electromagnetic radiation sensor 302, the two sensors share common structural constraints. The second heat flux sensor 200 is another example where the second heat flux sensor 200 and the infrared electromagnetic radiation sensor 302 share common structural constraints and where one or more of those common structural constrains vary between the second heat flux sensor 200 and the infrared electromagnetic radiation sensor 302.

In another embodiment, instead of forming the heat flux sensors in the cluster of sensors in Figure 4 as instances of the first heat flux sensor 100, instances of the second heat flux sensor 200 can be employed in place of the first heat flux sensors 100. In another example, instead of employing only heat flux sensors of the same kind (the first heat flux sensor 100), a combination of different heat flux sensors can be employed, for example one of the instances of the first heat flux sensor 100 can be replaced by an instance of the second heat flux sensor 200 in the cluster of sensors of Figure 4. In further example, instead of employing only heat flux sensors of the same kind (instances of the first heat flux sensor 100), a combination of different heat flux sensors can be employed, for example the third thermal sensor device 300 of Figure 3 can be supplemented with an instance of the second heat flux sensor 200, which when optionally provided as part of a cluster of sensors, for example of the kind of Figure 4 comprising two instances of the infrared electromagnetic radiation sensors 302 and two instances of the first heat flux sensor 100, is disposed between an instance of the infrared electromagnetic radiation sensor 302 and an instance of the first heat flux sensor 100.

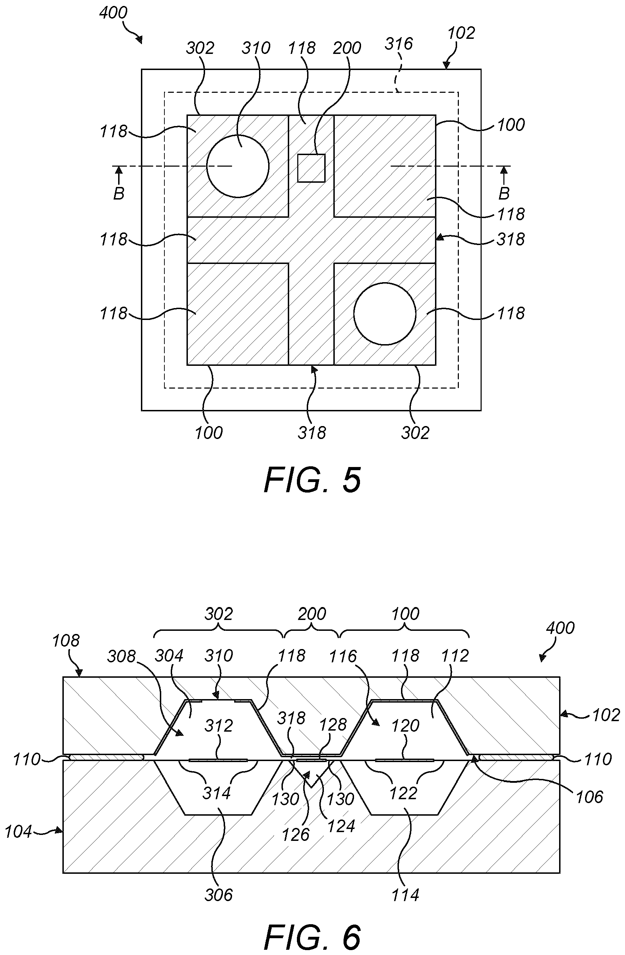

In this regard, and referring to Figure 5, a fourth thermal sensor device 400 is arranged similarly to the third thermal sensor device 300 of Figure 4. However, in this example, an additional sensor, in the form of an instance of the second heat flux sensor 200 of Figure 2 is integrated within the die constituting the fourth thermal sensor device 400. In this regard, the second heat flux sensor 200 is disposed between one of the infrared electromagnetic radiation sensors 302 and one of the heat flux sensors 100. As in the example described above in relation to Figures 3 and 4, the infrared electromagnetic radiation sensors 302 and the first heat flux sensors 100 are arranged in pairs, along with the additional second heat flux sensor 200, as a cluster within the hermetic local environment 316. Turning to Figure 6, along the line B-B of Figure 5, the fourth thermal sensor device 400 comprises the first thermal infrared radiation sensor 302, the first heat flux sensor 100 and the second heat flux sensor 200. These are formed, as described above, on a single die as a cluster with another instance of each of the first thermal infrared radiation sensor 302 and the first heat flux sensor 100 in the hermetic local environment 316. In other examples, the cluster can comprise only a single instance of each of the first thermal infrared radiation sensor 302, the first heat flux sensor 100 and the second heat flux sensor 200. Returning to Figure 6, the first and fifth recesses 112, 304, are formed in the cap layer 102 and the second, fourth and sixth recesses 114, 124, 306 are formed in the substrate layer 104 and are respectively located so that when the cap layer 102 is brought together with the substrate layer 104, the first and fifth recesses 112, 304 are respectively in registry with the second and sixth recesses 114, 306 to form the first, second and third cavities 116, 126, 308 (the third recess not being present in this example). The instance of the second heat flux sensor 200 can also be used, if desired, to measure pressure or pressure change within the hermetic local environment 316.

As in the previous examples, in order to process signals generated by the first thermopile sensor structure of the first heat flux sensor 100, the second thermopile sensor structure of the second heat flux sensor 200, and the third thermopile sensor structure of the infrared electromagnetic radiation sensor 302, the substrate layer 104 again comprises signal processing circuitry, for example an integrated circuit formed in and/or on the substrate layer 104. However, it will be appreciated by the skilled person that the substrate layer 104 need not comprise the signal processing circuitry and the signal processing circuitry can be provided elsewhere, for example on a separate die.

The fourth thermal sensor device 400 can be employed in a core temperature measurement apparatus. In such an apparatus, a data store, for example a memory, such as a digital memory, can be provided in order to record, for subsequent retrieval, a first thermal resistance value of the instance of the second heat flux sensor 200 and a second thermal resistance value of a sample to be tested. In such an apparatus, the data store can be supported by the signal processing circuitry employed to support measurement by the second thermopile sensor structure.

In the above example, the instances of the first heat flux sensor 100 are primarily employed to provide measurements of parasitic heat fluxes in order to calculate one or more compensation value to be applied to measurements made using the instances of the infrared electromagnetic radiation sensor 302. However, the first heat flux sensors 100 can optionally also be used to calculate vertical heat fluxes from the cap layer 102 to the substrate layer 104.

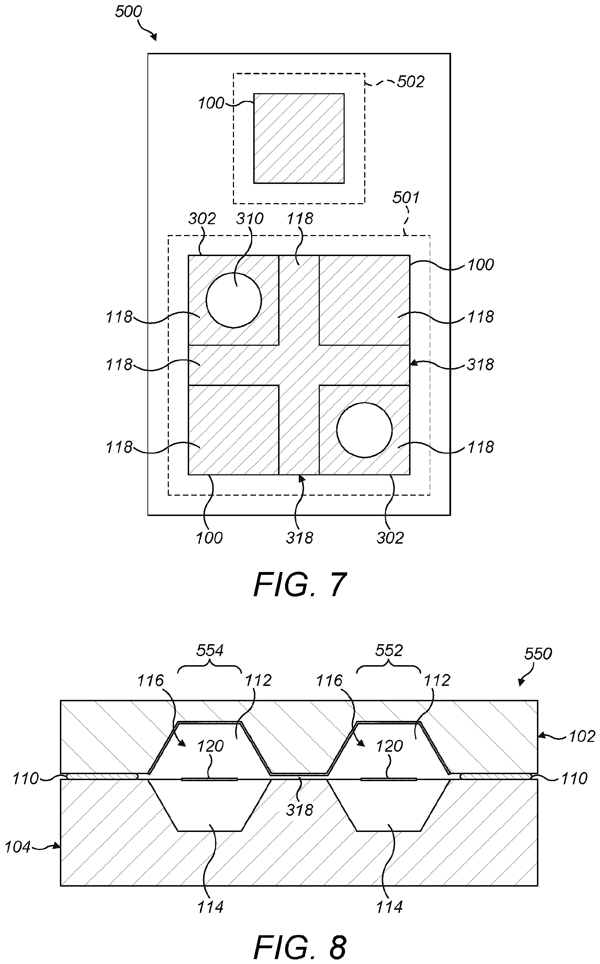

Turning to Figure 7, in a further embodiment, a fifth thermal sensor device 500 comprises more than one hermetic local environment, for example the die can comprise a first hermetic local environment 501 and a second hermetic local environment 502, separate and independent from the first hermetic local environment 501. As in the example of Figure 4, first and second instances of the first heat flux sensor 100 are provided in the first hermetic local environment 501 as part of the cluster of sensor devices, and a third instance of the first heat flux sensor 100 is provided in the second hermetic local environment 502. Although in this example, the third instance of the first heat flux sensor 100 is located within the second hermetic local environment 502, it should be appreciated that an instance of the second heat flux sensor 200 can instead be provided in the second hermetic local environment 502. In this example, the cluster of sensors within the first hermetic local environment 501 of the fifth thermal sensor device 500 also comprises first and second instances of the infrared electromagnetic radiation sensor 302.

Such an arrangement enables different pressures to be employed in respect of the two hermetic local environments 501, 502, thereby optimising performance of the instances of the infrared electromagnetic radiation sensors 302, for example where a low pressure is desirable, and also optimising performance of the third instance of the first heat flux sensor 100. As explained above, the optimal operational pressure requirements for infrared electromagnetic radiation sensors and heat flux sensors are different. As such, using different local environments enables the internal pressure of the second hermetic local environment 502 to be set to a higher pressure than the pressure in the first hermetic local environment 501, such as more than about 1mbar, more than about 10mbar or more than about 100mbar or more than about 700mbar, so that thermal conductive heat transfer dominates the heat transfer, when in use, between the cap layer 102 and the first thermally conductive membrane 120 in respect of the third instance of the first heat flux sensor 100, the first thermally conductive membrane 120 only being exposed to the cap layer 102. In relation to the first hermetic local environment 501, a low pressure close to a vacuum is desirable. However, it is noted that a perfect vacuum is not achievable in practice, but pressures corresponding to a near-vacuum are acceptable, for example pressures less than about 0.1mbar, for example less than about 0.01 mbar or less than about 0.001mbar.

In another example, the first hermetic local environment 501 does not comprise the first and second instances of first heat flux sensor 100. However, when first heat flux sensors 100 are employed, it is possible to provide compensation for the parasitic heat flux components mentioned above when using the instances of the infrared electromagnetic radiation sensors 302 to measure temperature. In the example of Figure 7, the instance of the first heat flux sensor 100 or the instance of the second heat flux sensor 200 within the second hermetic second local environment 502 can also optionally be used to calculate a compensation value for the parasitic heat flux components mentioned above in addition to measuring the vertical heat fluxes from the cap layer 102 to the substrate layer 104. It should also be understood that, in some examples, a single instance of the infrared electromagnetic radiation sensor 302 can be provided in the first hermetic local environment 501 as opposed to multiple instances thereof and in such examples the instances of the first or second heat flux sensor 100, 200 in the first hermetic local environment 501 need not be provided.

In relation to calculation of the vertical heat fluxes mentioned above, a structural constraint of, for example, the first heat flux sensor 100 or the second heat flux sensor 200 can be varied as compared with the same structural constraint or constraints of the infrared electromagnetic radiation sensor 302 to optimise performance of the first heat flux sensor 100 or the second heat flux sensor 200. In this regard, the first heat flux sensor 100 and the infrared electromagnetic radiation sensor 302 each possess a plurality of common structural constraints, and indeed the second heat flux sensor 200 also possess a number of structural constraint in common with the infrared electromagnetic radiation sensor 302. However, it is also desirable, for example in relation to the first heat flux sensor 100, to provide a variation of one or more sensor structural constraints for calibration purposes. The details of the calibration process will be described later herein in further details. However, turning to Figure 8, in another example the requirement of different heat flux sensor performance for calibration purposes can be accommodated as follows.

This example is based upon a modification of the embodiment of Figure 4, where a structural constraint of a first instance of the first heat flux sensor 100 differs from the same structural constraint of a second of the first heat flux sensor 100. In this regard, a sixth thermal sensor device 550 of Figure 8, corresponding to cross-section A-A of Figure 4, comprises the first instance 552 of the first heat flux sensor 100 and the second instance 554 of the first heat flux sensor 100 within the first hermetic local environment 501 bounded by the glass frit 110 and in fluid communication with each other by the passageway 318.

In order to provide functional variability to facilitate calibration, in this example the structural constraint that differs in value between the first instance 552 and the second instance 554 of the first heat flux sensor 100 is the depth of the first recess 112, the depth of the second recess 114 remaining unchanged.

As a consequence, the first cavity 116 of the first instance 552 of the first heat flux sensor 100 is greater than the first cavity 116 of the second instance 554 of the first heat flux sensor 100 and thus the volume of gas above the first thermally conductive membrane 120 of the first instance 552 of the first heat flux sensor 100 is greater than the volume of gas above the first thermally conductive membrane 120 of the second instance 554 of the first heat flux 100. The response of the first instance 552 of the first heat flux sensor 100 to heat fluxes therefore differs from the response of the second instance 554 of the first heat flux sensor 100 to the same heat fluxes.

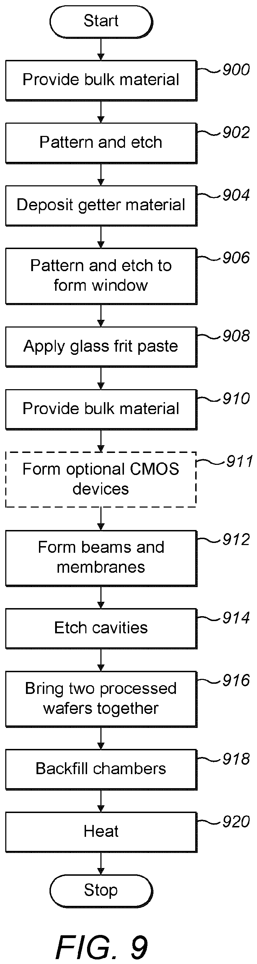

Manufacture of the fourth thermal sensor device 400 will now be described with reference to Figure 9. However, it should be appreciated that the same process can be applied to the thermal sensor devices of Figures 1 to 4, and 8. In relation to the embodiment of Figure 7, variations to the method of manufacture will be mentioned where appropriate.

The cap layer 102 is formed by providing (Step 900) a layer of light-transmissive bulk material, for example silicon. The layer of bulk material is then patterned and etched (Step 902) using any suitable lithographic technique in order to form the first recess 112, the fifth recess 304, and optionally the third recess. In this example, the third recess is not present and the first and fifth recesses 112, 304 taper inwardly with depth of etching, thereby yielding an etched layer of bulk material. For embodiments where an instance of the first heat flux sensor 100 or the second heat flux sensor 200 are to be provided in the second hermetic local environment 502 (Figure 7), the third recess (where required) is formed outside of a region notionally reserved for the first hermetic local environment 501. Following etching and removal of photoresist from the etching process, the layer of getter material 118 is then deposited (Step 904) over an inner surface of the etched layer of bulk material. The layer of getter material 118 is then patterned (Step 906) to define the window 310 in the layer of getter material 118, substantially centrally at the deepest part of the fifth recess 304, and then etched using any suitable lithographic technique to form the window 310 and complete the cap layer 102. Although the layer of bulk material is light transmissive other materials that are less light transmissive can be employed and the window 310 can be formed in the layer of bulk material, for example by etching.

Thereafter, glass frit paste is deposited (Step 908) on the substrate-facing surface 106 of the cap layer 102 peripheral to the first and fifth recesses 112, 304. Where the second hermetic local environment 502 is being formed, the glass frit paste is also deposited on the substrate-facing surface 106 of the cap layer 102 peripheral to the location of the third recess irrespective of whether it is being provided or not, because the fourth recess 124 is in any event being provided. In this example, the glass frit paste is deposited by a printing process on the cap layer 102, because the glass-frit paste has to be "fired" after printing. However, other suitable known deposition techniques can be employed. Furthermore, it should be appreciated that although glass frit paste is employed in this example to bond the wafers, any other suitable wafer bonding materials can be deposited and structured to bond the cap layer 102 to the substrate layer 104.

The substrate layer 104 is then formed, although it is conceivable that the substrate layer 104 can be formed in parallel with the cap layer 102 or prior to formation of the cap layer 102. To form the substrate layer 104, a layer of bulk substrate material, for example silicon, is provided (Step 910). Where CMOS devices are to be formed in the substrate layer 104, the CMOS devices are formed (Step 911) using any suitable CMOS processing technique or techniques prior to formation of a silicon dioxide layer. The silicon oxide layer (not shown) is then grown on the layer of bulk substrate material. The first, second and third sets of beams 122, 130, 314, which are also known as webs, and relatively thin, shaped, structures constituting the first, second and third thermally conductive membranes 120, 128, 312 (sometimes called "diaphragms") are then formed (Step 912), using any suitable MEMS processing technique, for example by etching away at defined areas of the silicon oxide layer until the silicon of the layer of bulk substrate material is reached. Where the second hermetic local environment 502 is to be provided, the second set of beams 130 and the second thermally conductive membrane 128 are formed within the area on the substrate layer 104 intended for the second hermetic local environment 502. The first set of beams 122 and the first membrane 120 are configured so as to form the first thermopile, and the second set of beams 130 and the second membrane 128 are configured so as to form the second thermopile, and the third set of beams 314 and the third membrane 312 are configured so as to form the third thermopile. Proximal ends of the first, second and third sets of beams 122, 130, 314 are respectively coupled to the first, second and third membranes 120, 128, 312. Distal ends of the first, second and third sets of beams 122, 130, 314 are coupled to the bulk layer of substrate material. The distal ends of the first, second and third sets of beams 122, 130, 314 are connected to the electrically conductive pathways (not shown, but mentioned above), which can include through vias, formed within the bulk material of the substrate layer 104. As the formation of the first, second and third sets of beams 122, 130, 314, the first, second and third membranes 120, 128, 312 or the vias, are not central to an understanding of the embodiments set forth herein, for the sake of clarity and conciseness of description details of these parts of the first heat flux sensor 100, the second heat flux sensor 200 and the infrared electromagnetic radiation sensor 302 will not be described further herein. Portions of the bulk layer of substrate material beneath the first, second and third sets of beams 122, 130, 314 and the first, second and third membranes 120, 128, 312 are then etched (Step 914) so as to form the second, fourth and sixth recesses 114, 124, 306 over which the first, second and third sets of beams 122, 130, 314 and the first, second and third membranes 120, 128, 312 are suspended, using any suitable known etching technique.

Once the cap layer 102 and the substrate layer 104 have been formed, the cap layer 102 and the substrate layer 104 are then brought together (Step 916) in an aligned manner to define the first cavity 116 of the first heat flux sensor 100, the second cavity 126 of the second heat flux sensor 200 and the third cavity 308 of the infrared electromagnetic radiation sensor 302, the first, second and third cavities 116, 126, 308 being within the body of the fourth thermal sensor device 400. In the case of the provision of the second hermetic local environment 502, the second cavity 126 can be of the type employed in relation to an instance of the second heat flux sensor 200 or can be of the type employed when forming an instance of the first heat flux sensor 100. In any event, the second cavity 126 is located within the area where the second hermetic local environment 502 is to be formed.

Where only the hermetic local environment 316 is being provided, the first, second and third cavities 116, 126, 308 are then backfilled (Step 918) with a suitable gas, for example Nitrogen, or an inert gas, for example Argon. The first, second and third cavities 116, 126, 308 are backfilled to a first predetermined pressure greater than 10mbar, for example greater than 12mbar or greater than 15mbar or greater than 30mbar, or for example greater than 100mbar, or for example greater than 300mbar, or for example greater than 700mbar. However, where the first and second hermetic local environment 501, 502 are being employed, the region where the second hermetic local environment 502 is being formed is sealingly isolated from the region where the first hermetic local environment 501 is being formed so that the second hermetic local environment 502 can be pressurised to a different pressure to the first hermetic local environment 501. In this regard, contemporaneously with backfilling the region where the first hermetic local environment 501 is being provided, the isolated region where the second hermetic local environment 502 is backfilled to a second, higher, predetermined pressure than the first hermetic local environment 501. Example pressures include pressures greater than 10mbar, for example greater than 12mbar or greater than 15mbar or greater than 30mbar, or for example greater than 100mbar, or for example greater than 300mbar, or for example greater than 700mbar. The pressure in the first local environment 501 (pre-hermetic sealing) can be achieved by, for example, integrating a getter inside the first local environment 501, such that during backfilling of the mated wafers forming the fourth thermal sensor devices 400, the gas pressure within the first hermetic local environment 501 is substantially lower than the gas pressure within the second hermetic local environment 502 due to the sorption by the getter. In another example, instead of using a single getter, a getter can be integrated in each of the first and second hermetic local environments 501, 502 , each getter having different design parameters for example different surface areas and/or volumes, and the volume of each of the first and second hermetic local environments 501, 502 can be designed so that in combination with the two different getters the residual pressure inside the first hermetic local environment 501 is lower than the pressure inside the second hermetic local environment 502. The pressure in the second hermetic local environment 502, which is to be set in this example to a pressure higher than the pressure in the first hermetic local environment 501 is to be set, depends upon the pressure to which the first hermetic local environment 501 is intended to be set.

The sandwich of the cap layer 102, the glass frit paste 110 and the substrate layer 104 are then heated (Step 920) to a temperature above about 410° C in accordance with any suitable glass frit bonding technique to a predetermined temperature in order to bond the cap layer 102 to the substrate layer 104, therefore completing formation of the first heat flux sensor 100, the second heat flux sensor 200 and the infrared electromagnetic radiation sensor 302, the cap layer 102 and the substrate layer 104 being bonded to each other so as to form a hermetic seal around the periphery of the cap and substrate layers 102, 104. In this example, the predetermined temperature is also an activation temperature of the getter material 118. As mentioned above, the heating temperature employed is above about 410° C, and can be about 420° C or above, about 430° C or above, about 435° C or above, or about 440° C.

During heating, the layer of getter material 118 activates in order to sorb molecules released from the structure of the fourth thermal sensor device 400 during the heating process when bonding the cap portion 102 to the substrate portion 104. These molecules include hydrogen molecules, and the getter material 118, in this example, sorbs more hydrogen than the backfilling gas. Hydrogen has a larger influence on thermal conductivity within the first, second and third cavities 116, 126, 308, as compared to other gasses, for example nitrogen. Preferentially, the getter sorbs all the hydrogen that is being outgassed during the wafer bonding process, but if the surface area or the volume of the getter material 118 is insufficient to getter all the hydrogen outgassed during the wafer bonding process mentioned above when the cap layer 102 is bonded to the substrate layer 104, sufficient hydrogen gas is nevertheless gettered so that the residual hydrogen gas pressure within the first, second and third cavities 116, 126, 308 is too small as a proportion of the pressure of the backfill gas to influence the thermal conductivity in the first, second and third cavities 116, 126, 308 significantly. As such the sensitivity drift of the fourth thermal sensor device 400 is improved. In this example, the activation of the getter material 118 takes place at the same time as the glass frit bonding. However, in other examples, the activation of the getter material 118 can take place subsequent to the glass frit bonding using a subsequent heating process.

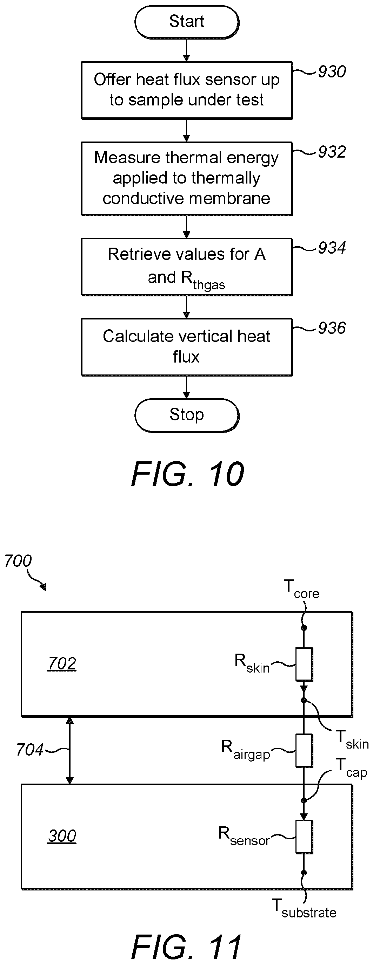

Turning to Figure 10, a vertical heat flux can be measured using the first heat flux sensor 100, the second heat flux sensor 200 or an instance of either in a thermal sensor device comprising one or both of the first heat flux sensor 100 and/or the second heat flux sensor 200. For the sake of conciseness of description, measurement of the vertical heat flux will be described with reference to the first heat flux sensor 100, but the skilled person should appreciate that method of measurement of the vertical heat flux can apply equally to the second heat flux sensor 200.

The reception side 108 of the first heat flux sensor 100 is typically offered up to a source of thermal energy (Step 930) where a heat flux can be present, for example a sample under test, for example a body, such as a human body. In this regard, the sample under test can be in vivo. It should be appreciated that the "sample under test" is different from a so-called "device under test", and the two should not be confused. The skilled person should also appreciate that although, in this example, the reception side 108 of the first heat flux sensor 100 is offered up to the source of thermal energy, in other examples the backside of the first heat flux sensor 100 can be offered up to the source of thermal energy, any heat flux measured by the first heat flux sensor 100 simply having a different sign, i.e. a negative value instead of a positive value.

In some examples, the offering up of the first thermal sensor 100 is by way of integration of the first thermal sensor 100 into an apparatus, for example a wearable apparatus, such an earbud or so-called "smart watch" or other wearable electronic device. The thermal energy in the form of the heat flux is transferring to the first heat flux sensor 100 by firstly transferring to the cap layer 102 of the first heat flux sensor 100 before passing to the substrate layer 104. The vertical heat flux passing from the cap layer 102 to the substrate layer 104 can be measured and thus the heat flux transferring from the exterior of the first heat flux sensor 100 to the material from which the first heat flux sensor 100 is formed can also be measured.

In this regard, as the vertical heat flux passes from the cap layer 102 to the substrate layer 104, thermal energy from the vertical heat flux is transferred to the thermally conductive membrane 120, which is translated to first electrical energy by the first thermopile sensor structure. This generation (Step 932) of the first electrical energy, as a voltage across electrodes of the first thermopile sensor structure, can be expressed by the following equation:

$$V_{\text{heatfluxpixel}} \approx \alpha \cdot HF \qquad\qquad (1)$$

where $V_{\text{heatfluxpixel}}$ is the output voltage generated by the first thermopile sensor structure, HF is the actual received vertical heat flux being measured, and $\alpha$ is the sensitivity of the first heat flux sensor 100 to the heat flux received. Where the first heat flux sensor 100 is part of a larger device, this sensitivity can be of the device and not just the sensitivity of the first heat flux sensor 100 alone. If needed, an offset parameter $V_{\text{off}}$ can be employed in equation (1) to yield a modified version of equation (1): $V_{\text{heatfluxpixel}} = \alpha.HF + V_{\text{off}}$. The sensitivity parameter, $\alpha$, is inversely depends upon the thermal resistance of the gas inside the first cavity 116 of the first heat flux sensor 100. Consequently, when the first heat flux sensor 100 is required to possess a high sensitivity to the heat fluxes, the design of the first heat flux sensor 100 is optimised such that the thermal resistance of the gas in the first cavity 116 is as low as possible. This therefore requires the pressure of the gas inside the first cavity 116 to be sufficiently high, for example greater than about 1mbar, and/or the design of the structure of first heat flux sensor 100 to be optimised, such as by way of optimising the distance between the thermally conductive membrane 120 and the walls of the first cavity 116.

This is in contrast to optimising the structure of the heat flux sensor 100 for use as an infrared sensing device, because the sensitivity of an infrared sensing device to a received infrared radiative heat signal is proportional to the thermal resistance of the gas inside the first cavity 116 at a first order of magnitude level. In view of this contrast, it is desirable to form two separate sensor devices, each optimised for their own purpose, i.e. a heat flux sensor and a separate infrared sensor.

The signal processing circuitry of the substrate layer 104, in this example, retrieves (Step 934) the value of the sensitivity parameter, $\alpha$, and uses the output voltage generated by the first thermopile sensor structure in conjunction with the retrieved value of $\alpha$ in order to calculate (Step 936) the vertical heat flux, HF, passing from the cap layer 102 to the substrate layer 104. In examples, where the fourth thermal sensor device 400 is integrated sensor solution, the sensitivity parameter, $\alpha$, can be stored by a memory of the CMOS integrated circuitry of the substrate layer 104. However, in other examples, the sensitivity parameter, $\alpha$, can be stored by another memory remote from the fourth thermal sensor device 400.

With additional measurement information, a core temperature of the sample under test can be measured. Referring to Figure 11, a measurement model 700 comprising the sample under test, where the sample is a body 702 such as the human body, also comprises for example the third thermal sensor device 300. The measurement model 700 in this example models a relatively simple thermal system. However, as mentioned above where the third thermal sensor device 300 is integrated into another device, the thermal system can be a network of thermal resistances or capacitances including components attributable to the device into which the third thermal sensor device 300 is incorporated. The third thermal sensor device 300 can be in contact with the body 702 or, optionally, as shown in Figure 11, an air gap 704 can exist between the body 702 and the third thermal sensor device 300. The body 702 comprises a core temperature $T_{core}$ and the skin of the body 702, constituting a boundary layer, comprises a skin temperature $T_{skin}$. The skin of the body also comprises a thermal resistance, $R_{skin}$. The air gap 704 also provides a thermal resistance, $R_{airgap}$. In this example, the air gap 704 is assumed to be very small and having negligible effect on measurement of core temperature. At the third thermal sensor device 300, the cap layer 102 is at a temperature, $T_{cap}$, associated with the heat flux, HF, passing from the body 702 to the third thermal sensor device 300, the heat flux, HF, being a parameter required to determine the core temperature, $T_{core}$, of the body 702. The first heat flux sensor 100 of the third thermal sensor device 300 possesses a thermal resistance, $R_{sensor}$, and the substrate layer 104 is at a different temperature, $T_{substrate}$, to the cap layer 102.

Assuming an a *priori* knowledge of the thermal resistances of the skin, $R_{skin}$, and the thermal resistance, $R_{sensor}$, of the first heat flux sensor 100, the core temperature, $T_{core}$, of the sample under test can be determined. The manner in which the thermal resistances of, for example, the skin and the sensor are obtained, for example through calibration, will be described below.

Turning to Figure 12, the vertical heat flux, HF, is measured (Step 940) by the first heat flux sensor 100 of the third thermal sensor device 300, and the temperature of the skin, $T_{skin}$, is measured (Step 942) by the infrared electromagnetic radiation sensor 302 of the third thermal sensor device 300, the third thermopile sensor structure of which translates thermal energy into electrical energy. The values previously obtained for the thermal resistances of the skin, $R_{skin}$, and the thermal resistance, $R_{sensor}$, of the first heat flux sensor 100 are retrieved (step 944) by the signal processing circuitry and then the core temperature, $T_{core}$, of the sample under test 702 is calculated (Step 946) using the following equation:

$$T_{core} = T_{skin} + (HF \times R_{skin}) \qquad (2)$$

The actual vertical heat flux, HF, through the skin differs from the value measured by the first heat flux sensor 100, HF'. As mentioned above, the thermal resistances of the skin, $R_{skin}$, and the thermal resistance, $R_{sensor}$, of the first heat flux sensor 100 are a *prioiri* values obtained through one or more calibration processes.

The measurement of the heat flux, HF', is based on the difference of the temperatures between the cap layer 102 and the substrate layer 104 and is equal to the product of the thermal resistance of the sensor, $R_{sensor}$, and the vertical heat flux, HF', passing through the first heat flux sensor 100:

$$T_{cap} - T_{substrate} = R_{sensor} \times HF' \qquad (2)$$

Rearranging equation(2), we obtain an expression for the measured heat flux, HF':

$$HF' = \frac{T_{cap} - T_{substrate}}{R_{sensor}} \qquad (3)$$

The thermal resistance of the sensor, $R_{sensor}$, represents all the thermal resistances of all materials in the third thermal sensor device 300. Where multiple thermal resistances exist in series and in parallel inside the first heat flux sensor 100, the total thermal resistance is determined by a predefined series and parallel network of all these thermal resistances. In one example, one of the multiple thermal resistances of a parallel network of those thermal resistances is typically much smaller than the other thermal resistances, and so the smallest thermal resistance dominates the parallel network and defines the largest contribution to the thermal resistance of the first heat flux sensor 100. This is particularly so when the cap layer 102 and substrate layer 104 are bonded together, for example employing the glass frit mentioned above or a eutectic bond layer. In the case of the glass frit layer 110, which is used for connecting the cap layer 102 and the substrate layer 104, the glass frit layer 110 functions as a thermal insulator between the cap layer 102 and substrate layer 112 and so is a significant contributor to the thermal resistance, $R_{sensor}$, of the first heat flux sensor 100.

As the difference in temperature between the cap layer 102 and the substrate layer 104 is being measured by the first heat flux sensor 100, and the thermal resistance of the sensor, $R_{sensor}$, is known through calibration, the heat flux through the heat flux sensor 100, HF', can be measured. In this example, the temperature difference is between the substrate-facing side 106 and the substrate layer 104 owing to the thermal conductivity of the cap layer 102 being relatively high as a result of the cap layer 102 being formed, in this example, from silicon. As the measured heat flux, HF', differs from the actual heat flux, HF, the calibration process provides a compensation function that translates or "maps" the measured heat flux, HF', to the actual heat flux, HF:

$$HF = f_{compensation}(HF') \qquad (4)$$

The compensation function depends upon the thermal resistances and the design of the third thermal sensor device 300 (including packaging) and the manner in which the first heat flux sensor 100 is integrated into the third thermal sensor 300 and, where applicable, integrated into another device.

As mentioned above, the thermal resistances of the skin, $R_{skin}$, and the thermal resistance, $R_{sensor}$, of the first heat flux sensor 100 are obtained through one or more calibration processes. Depending upon the parameter being calibrated, the calibration takes place during manufacture of the sensor device, and/or when the sensor device is installed in another device or module where it finds applications (so-called "in-application" calibration), and/or when in situ, for example when the sensor device is being used or about to be used, such as post retail sale. In this regard, a first calibration process is performed during manufacture of the third thermal sensor device 300 to obtain the thermal resistance, $R_{sensor}$, of the first heat flux sensor 100 and a second, separate, calibration process is performed to obtain the thermal resistance of the skin, $R_{skin}$.

The thermal resistance, $R_{sensor}$, of the first heat flux sensor 100 is assumed to remain substantially unchanged throughout the lifetime of the third thermal sensor device 300. The thermal resistance of the skin, $R_{skin}$, however is a value that can vary, because it is dependent upon physical attributes of the patient or user wearing an apparatus containing the third thermal sensor device 300, for example a level of subcutaneous adipose tissue for some applications. Therefore, in relation to the thermal resistance of the skin, $R_{skin}$, it is beneficial to perform the calibration process in-situ at least occasionally when the sensor device is in use. In contrast, it is in principle sufficient to measure the thermal resistance, $R_{sensor}$, of the first heat flux sensor 100 only once, which can be done during the wider factory calibration process, including if required during integration of the thermal sensor device in another device, for example a wearable device. In some examples, other data can be employed to derive the thermal resistance of the skin, $R_{skin}$, for example one or more other parameters from sources relating to physical attributes of the patient or user, such as body fat percentage if this data about the patient or user is known. In this regard, when the body fat percentage is updated, the thermal resistance of the skin, $R_{skin}$, can also correspondingly be updated. Other parameters can also be employed to determine an up-to-date value for the thermal resistance of the skin, $R_{skin}$, for example body weight, height, age, and/or gender.

Calibration during manufacture to determine the thermal resistance, $R_{sensor}$, of the first heat flux sensor 100 is, in this example, achieved by measuring the output voltage of the first heat flux sensor 100 when applying known temperatures to both sides of the wafer stack forming the third thermal sensor device 300, i.e. to the cap layer 102 and the substrate layer 104. The temperatures applied to the cap layer 102 and the substrate layer 104 are, for example during a first measurement cycle the same, after which the output voltage of the first heat flux sensor 100 is compared with a measurement of the output voltage where an intentional temperature difference is applied across the cap layer 102 and the substrate layer 104. In another example, the sensitivity of the heat flux sensor can be calibrated by applying two or more different pairs of distinct temperatures to the cap layer 102 and the substrate layer 104, respectively. In theory, only a single pair of distinct temperatures applied to the cap layer 102 and the substrate layer 104, respectively, is sufficient to calibrate the heat flux sensor sensitivity. However, if an offset is present and needs to be removed through calibration, a second pair of temperatures applied to the cap layer 102 and the substrate layer 104 is needed, where at least one of the temperatures of the second pair of temperatures is different to the temperatures of the first pair of temperatures. It should be appreciated that the temperature difference may be achieved by applying different temperatures to the reception side 108 and the backside of the first heat flux sensor 100, but for the purposes of convenience, a source of thermal energy can in some examples only be applied to one side of the first heat flux sensor 100.

These measured output voltages in combination with the known temperatures applied across the cap layer 102 and the substrate layer 104 are then used, in conjunction with equation (2) above in order to determine the thermal resistance, $R_{sensor}$, of the first heat flux sensor 100. Although a set of two different temperatures of the cap layer 102 and the substrate layer 104 are only required for calibration using equation (2), in a further refinement two sets of two different temperatures across the cap layer 102 and the substrate layer 104 can be employed in order to determine the thermal resistance, $R_{sensor}$, of the first heat flux sensor 100 with greater accuracy. A further manner of determining the thermal resistance, $R_{sensor}$, of the first heat flux sensor 100 is to employ a heat flux measurement device of known high accuracy against which the first heat flux sensor 100 can be calibrated by comparing the heat flux measured by the first heat flux sensor 100 with the heat flux measured by the high-accuracy heat flux measurement device.

It is also possible to perform calibration of the first heat flux sensor 100 in-situ, i.e. when the third thermal sensor 300 is being applied or used by a user. In-use calibration can be achieved using a software application that can request a user to make an initial core body temperature measurement using an accurate temperature measurement apparatus, for example an ear thermometer, and subsequently request the user to enter the measured initial core body temperature data into the software application. Alternatively, if the user is in a healthy state, a nominal core body temperature can be assumed by the software application instead of requesting the user to make an accurate temperature measurement, although this can in turn lead to a lower accuracy of the body core temperature measurement. The signal processing circuitry of the third thermal sensor device 300, or a separate microcontroller can be used to derive the actual heat flux from the measured core body temperature using both an output signal from the infrared electromagnetic radiation sensor 302 at (or close by) the skin of the user when the core body temperature measurement was made, and by the output signal of the first heat flux sensor 100 when the core body temperature measurement was made. In other examples, a different temperature-related output signal obtained from the thermal system of the third thermal sensor 300 can be used as an alternative to the output signal generated by the infrared electromagnetic radiation sensor 302. For example, the temperature of the substrate layer 104, $T_{substrate}$, (Figure 11) can be an suitable thermal node in the thermal system as a replacement for the temperature of the skin, $T_{skin}$. Indeed, in any of the examples described herein, the devices can comprise a substrate temperature sensor to measure an absolute temperature of the substrate layer 104. In another example, the temperature of the cap layer 102, $T_{cap}$, (Figure 11) can also be a suitable thermal node in the thermal system as a replacement for the temperature of the skin, $T_{skin}$. As the skilled person would appreciate, in order to calculate the body core temperature, $T_{core}$, which is an unknown in the thermal network, one can select two signals one of which is the heat flux output signal and the other signal can be the temperature of any suitable node in that thermal network. The relationship between the temperatures selected is determined by a thermal resistance between them.

It should be appreciated that while the model of Figure 11 is expressed in terms of thermal resistances, the thermal system comprising the sample under test and the third thermal sensor 300 can modelled in terms of thermal capacitance. In such a way, a thermal capacitance can be attributed to at least those thermal elements of the thermal network that have the highest thermal capacitances. As a thermal capacitance is a physical property of matter, and as thermal capacitance depends on the mass of the element and on the specific heat capacity of the matter from which the element is made, thermal capacitance is a parameter that can be calibrated in a similarly way to thermal resistance. As such, the total number of required calibration conditions that have to be used in order to properly calibrate the third thermal sensor device 300 depends upon the total number of system parameters (thermal resistances and thermal capacitances) that influence the output signals of the third thermal sensor device 300. In such circumstances, the sensitivity, $\alpha$, should be adjusted to account of both thermal resistances and capacitances.

The thermal resistance of the skin, $R_{skin}$, is an unknown that can differ between users. This means that, in fact, when attempting to determine the thermal resistance of the skin, $R_{skin}$, two unknowns actually exist: $R_{skin}$ and $T_{core}$. However, it is possible to determine both parameters using a set of two equations containing variables representing these two unknowns. In order to obtain two equations, two heat flux sensors are required or at least two different types of thermal sensor or at least two different sensor sub-systems within the same thermal sensor device, for example the third thermal sensor device 300. In this regard, by designing the structural constraints of the same kind of sensors within the same thermal sensor device to have different values, for example by providing the third thermal sensor device 300 in the form of a cluster comprising two instances of the first heat flux sensor 100 and forming the instances of the first heat flux sensor 100 so as to have cavities of different depths as described above in relation to Figure 8. Alternatively, as employed in the third thermal sensor device 300, two different kinds of blind sensor can be employed, i.e. an instance of the first heat flux sensor 100 and an instance of the second heat flux sensor 200, which exhibit different performance properties.

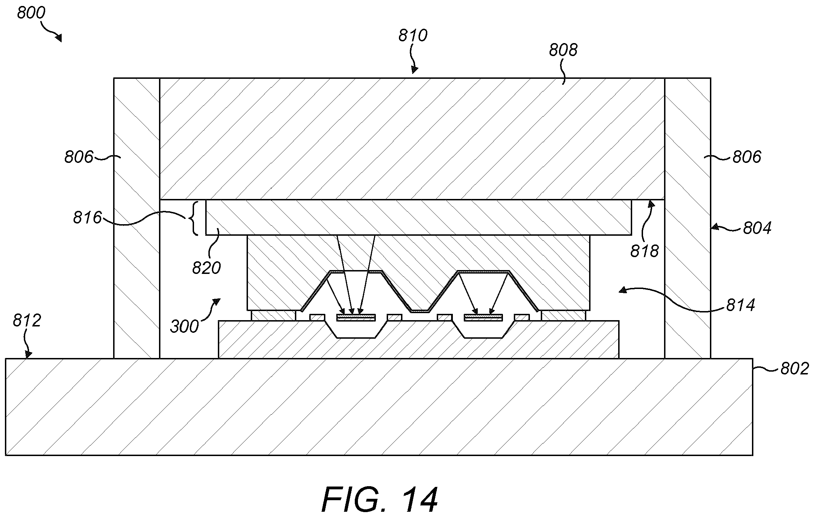

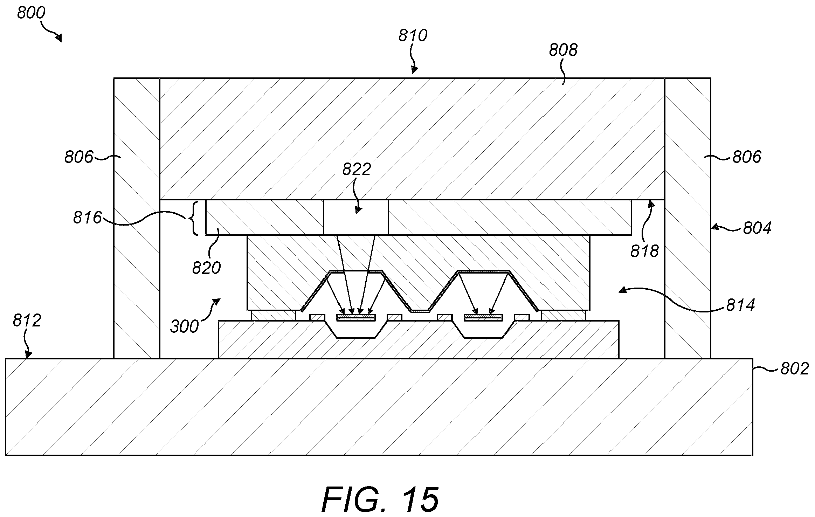

Referring to Figures 14 and 15, a module is formed for application purposes, for example a combined core and skin temperature measurement module that can be integrated into other devices, for example wearable devices, comprising the third thermal sensor device 300, the fourth thermal sensor device 400, the fifth thermal sensor device 500 or the sixth thermal sensor device 550 described above. Such devices comprise a combination of a heat flux sensor and a infrared electromagnetic radiation sensor, for example the first heat flux sensor 100 and the infrared electromagnetic radiation sensor 302.

In such modules, the third thermal sensor device 300, for example, is placed in a package, for example a so-called "can" package. The package provides a degree of protection to the third thermal sensor device 300 from an external environment, for example from potentially damaging foreign bodies, such as salt, as well as humidity, water, and dirt.

In one example, an application module 800, for example a thermal sensor module, comprises the third thermal sensor device 300 attached to a circuit board 802, for example a Printed Circuit Board. A package 804, for example a can package, is provided around the third thermal sensor device 300 and comprises a peripheral side wall 806 and a module cover 808 formed from any suitable material that is transmissive to infrared electromagnetic radiation and heat fluxes, for example silicon, germanium or High Density PolyEthylene (HDPE), or any other suitable material. The module cover 808 is sealingly set within the peripheral side wall 806 at an exposure side 810 of the application module 800. The peripheral wall 806 is attached to the circuit board 802 at an attachment side 812 of the peripheral wall 806, which is distal from and opposite to the exposure side 810 of the peripheral wall 806. The package 804 is affixed to the circuit board 802 at the attachment side 812 by soldering or bonding or gluing. The package 804 cooperates with the circuit board 802 in order to contain the third thermal sensor device 300 within a cavity 814 defined by the package 804 and the circuit board 802. When located within the cavity 814 on the circuit board 802, a gap or clearance 816 is present between the reception side 108 of the third thermal sensor device 300 and an inner surface 818 of the module cover 808. The air gap provided by this clearance 816, if not filled, represents a high thermal resistance that substantially hinders the flow of thermal energy to the first heat flux sensor 100 of the third thermal sensor device 300, potentially deflecting thermal energy to other components of the application module 800. In this regard, unaddressed, parallel thermal resistive networks exist: one from the module cover 808 through the clearance 816 and the third thermal sensor device 300, and one from the module cover 808 through the peripheral wall 806. The difference in thermal resistance between the peripheral wall 806 on the one hand and the combination of the thermal resistances of the clearance 816 and the third thermal sensor device 300 on the other hand determines how much thermal energy actually flows through the third thermal sensor device 300 when in use.

The removal of the clearance results in a significant improvement in the amount of thermal energy transferred to the third thermal sensor device 300, which, depending on the thickness of the clearance 816, can for example be as much as a factor of thirty or up to sixty or greater, thereby making the third thermal sensor device 300 practically useful for measuring a thermal energy input signal incident upon the module cover 808 of the application module 800.

Although the module cover 808 and the peripheral wall 806 of the package 804 are separate components, in other examples the module cover 808 and the peripheral wall 806 of the package 804 can be formed as a single monolithic component from the same material as the module cover 808. In such examples, the cavity 814 can for example be formed by etching the material from which the package 804 is formed into a required shape, or by forming the package 804 by any suitable technique, for example moulding, stamping or printing. This manner of forming the package 804 can serve to reduce so-called vertical tolerance stack-up of the package 804, which in turn helps to minimise the thickness of the clearance 816 and/or to minimise the tolerance of the thickness of the clearance 816. In this regard, any technique to manufacture the package 804 whilst minimising or reducing the vertical tolerance stack-up of the package 804 is of benefit. For example, any wafer-level technique that can be used to manufacture the package 804 as an array of instances of the package 804 on a wafer scale can be employed. Although the monolithic package has been described as formed from a single material above, such as silicon, the skilled person should appreciate that the package 804 can be formed from two or more materials, for example the module cover 808 can be formed from silicon and the peripheral wall 806 can be formed from glass or epoxy or any other wafer-level compatible material.

In this example, the clearance 816 is filled by providing a thermal interface material between the module cover 808 and the cap layer 102. The exact manner in which the thermal interface material is deployed depends upon the nature of the thermal interface material, for example how transmissive the thermal interface material is to infrared electromagnetic radiation. In this example, and referring in particular to Figure 14, the thermal interface material is sufficiently transmissive to infrared electromagnetic radiation for the radiative heat transfer between a remote object, when in use, and the infrared electromagnetic radiation sensor 302 of the third thermal sensor device 300 to occur. A layer of thermal interface material 820 is therefore integrated inside the module 800 and fits snugly between the module cover 808 and the cap layer 102. The layer of thermal interface material 820 can extend over an area greater than the area of the cap layer 102 or can be smaller in size than the cap layer 102. It could be made of a size which matches with the inner size of the cavity 814 in order to ease the assembly of it and in order to minimize the placement tolerances of it. The transmissivity of the thermal interface material to infrared electromagnetic radiation in an optical path propagating to the infrared electromagnetic radiation sensor 302 can be greater than about 10% of the propagating infrared electromagnetic radiation, for example greater than about 20% thereof, or greater than about 40%, or even greater than about 50% thereof. One example suitable thermal interface material is HDPE mentioned above. Additionally or alternatively, in order to achieve sufficient transmissivity to infrared electromagnetic radiation propagating through the layer of thermal interface material 820, the thickness of the layer of thermal interface material 820 is as small as possible, for example less than about 500 $\mu$ m, such as less than about 200 $\mu$ m.

However, and referring to Figure 15, where the thermal interface material is not sufficiently transmissive to infrared electromagnetic radiation, the layer of thermal interface material 820 comprises an access aperture 822 therein in order to permit infrared electromagnetic radiation incident upon the module cover 808 to propagate therethrough to the infrared electromagnetic radiation sensor 302. The aperture 822 is located in registry with the window 310 of the infrared electromagnetic radiation sensor 302 and sufficiently sized, in this example, to permit the window 310 of the infrared electromagnetic radiation sensor 302 to be utilised as much as possible. In other examples, more than one aperture can be provided in the layer of thermal interface material 820. Although the layer of thermal interface material 820 is not transmissive to infrared electromagnetic radiation in the example depicted in Figure 15, in other examples the access aperture can be employed in conjunction with the layer of thermal interface material 820 being transmissive to infrared electromagnetic radiation,

The aperture 822 can be provided by structuring the layer of thermal interface material 820, for example by etching or by patterning, printing, jetting or disposing the layer of thermal interface material 820, in order to provide at least one opening.

In other examples, the thermal interface material is selected to be compressive, such that the thermal interface material can absorb mechanical tolerances of the components of the application module 800 and cumulative tolerances resulting from assembly of the components of the application module 800. The material can be any suitable flexible material with a relatively low Young's modulus and sufficiently high compressive strength, for example an elastomeric material, for example a rubber, a silicone or a polyimide (PI) material. Materials that can be deposited during wafer processing and that can be patterned using lithographic processing techniques during wafer processing in order to create the aperture 822 are particularly beneficial. The layer of thermal interface material 820 can be deposited onto the module cover 808, or in other examples the layer of thermal interface material 820 can be deposited onto the reception side 108 of the cap layer 102 of the third thermal sensor device 300. In other examples, the layer of thermal interface material 820 is a separate component that can be inserted in-between the cap layer 102 of the third thermal sensor device 300 and the module cover 808.

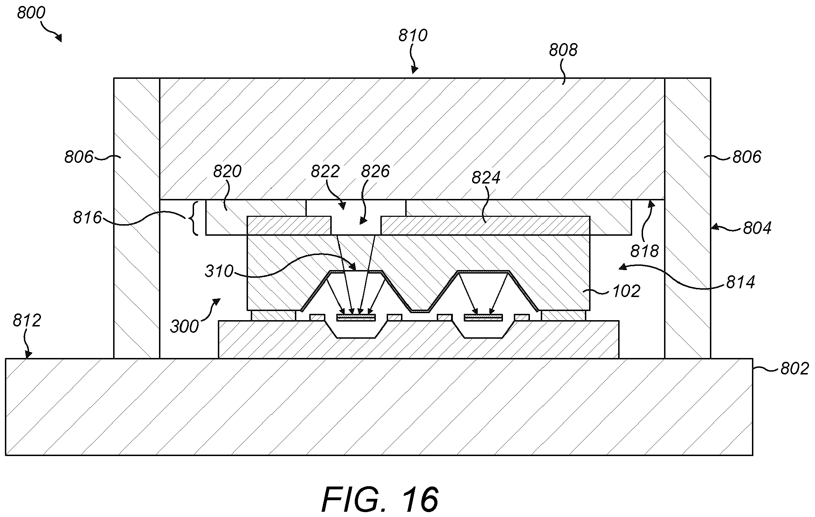

Referring to Figure 16, in another example, the clearance 816 can be filled with two separate components: a first layer of thermal interface material 820 and a second layer of thermal interface material 824. In this example, the first layer of thermal interface material 820 comprises a first aperture 822, as described above in relation to previous examples, and the second layer of thermal interface material 824 comprises a second aperture 826. The first aperture 822 can be sized so as to be larger than the size of the second aperture 826. By integrating the second thermal interface material 824 using, for example, a wafer-level technique or techniques as an additional layer adjacent the cap layer 102 of the third thermal sensor device 300, the alignment between the second aperture 826 and the window 310 of the third thermal sensor device 300 can be minimised. Additionally, the optical Field of View (FOV) and the sensitivity of the infrared electromagnetic radiation sensor 302 can be calibrated at device-level of the third thermal sensor device 300. By designing the size of the first aperture 822 to be large enough so that the first layer of thermal interface material 820 does not block or does not block significantly the optical FOV of the infrared electromagnetic radiation sensor 302, the sensitivity and the optical FOV of the infrared electromagnetic radiation sensor 302 are not or are only marginally impacted by the presence of the first layer of thermal interface material 820. Such an addition is particularly beneficial when the assembly tolerances in respect of the alignment between the window 310 and the first aperture 822 are relatively large. Also, when a flexible material is used as the first layer of thermal interface material 820, for example a rubber or a silicone or other flexible material, use of the second layer of thermal interface material 824 mitigates the effects arising from the flexibility of the first layer of thermal interface material 820, which can elastically or plastically compress and/or expand during the application lifetime of the application module 800. This compression and/or expansion can be, for example, a function of temperature, which can effectively change the optical FOV of the infrared electromagnetic radiation sensor 302 and thus the sensitivity of the infrared electromagnetic radiation sensor 302 when the second layer of interface material 824 is not present. When the first layer of thermal interface material 820 is selected to be a flexible material, the choice of material for the second layer of thermal interface material 824 is less restrictive in respect of flexibility and elastic material properties. In this regard, any suitable material can be selected as the second layer of thermal interface material 824 that is easily processable on a wafer-level scale, for example by deposition and structuring on top of the cap layer 102. A polyimide (PI) is an example of a suitable material. The height of the second layer of interface material 824 and the size of the second aperture 826 impacts the optical Field of View and hence the sensitivity of the infrared electromagnetic radiation sensor 302 of the third thermal sensor device 300.

Simplified variants of the above-described modules can also be manufactured. For example, the module 800 can comprise the thermal sensor device 300, 400, 500, or 550 attached to the circuit board 802 and the module cover 808. The thermal sensor device 300, 400, 500, or 550 is affixed to the circuit board 802 at the attachment side 812 by soldering or bonding or gluing. Further, the thermal sensor device 300, 400, 500, or 550 is electrically connected to the PCB using any known method, for instance using solder balls or bond wires. Depending on the application, the module cover 808 may be non-transmissive or transmissive to infrared electromagnetic radiation and heat fluxes. Glass, sapphire, plastics or ceramics are examples of suitable non-transmissive materials. Silicon, germanium, or High Density PolyEthylene (HPDE) are examples of suitable transmissive materials.

For some applications, the thermal sensor device cannot be directly attached to module cover 808, for instance to protect the thermal sensor device 300, 400, 500, or 550 from breaking. In such examples, the thermal interface layer 820 can be introduced on top of the cap layer 102 to be in contact with the module cover 808. The exact manner in which the thermal interface layer 820 is disposed depends upon the nature of the thermal interface material, for example the degree of transmissivity of the material of the thermal interface layer 820 to infrared electromagnetic radiation. In some applications, the transmissivity can be less than about 10% of the propagating infrared electromagnetic radiation, for example less than about 5%, or less than 1%. In such situations, the FOV of the infrared electromagnetic radiation sensor 302 can be limited by the thermal interface layer 820 and the infrared electromagnetic radiation sensor 302 measures the temperature of the thermal interface layer 820. In other applications, the thermal interface layer 820 can be transmissive so that the temperature of the module cover 808 is measured or, in cases where the module cover is transmissive to infrared electromagnetic radiation, the infrared electromagnetic radiation outside the module 800 can be measured by the infrared electromagnetic radiation sensor 302. In some situations, a packaged module is desirable.

It should also be appreciated that such modules 800 described above in their various forms can not only be used for measuring body core temperature or skin temperature, but also for other applications, for example measuring air temperature on one side of the module cover 808 when the thermal sensor device 300, 400, 500, or 550 is integrated with the other side of the module cover 808, or in another example for measuring the temperature of cookware, for example a cooking pot, on one side of a ceramic cooking top when the thermal sensor device 300, 400, 500, or 550 is integrated with and adjacent the other side of the ceramic cooking top.

In the above examples, the getter material 118 is deposited on the cap layer 102. However, in other embodiments, the getter material 118 can be deposited on the substrate layer 104 or on both the cap layer 102 and the substrate layer 104.

It should also be understood that although glass frit bonding is described throughout to bond the cap layer 102 to the substrate layer 104, any other suitable thermal bonding technique can be employed, for example eutectic bonding.

The use of thermopile sensor structures is described herein. However, the skilled person will appreciate that the embodiment set forth herein can be employed in relation to other thermal sensor structures, for example bolometers.

Whilst the clusters of pixels of some of the thermal sensor devices described herein comprise, in the above examples, the exposed or live infrared electromagnetic radiation sensor and the blind thermal sensor pairings, the skilled person should appreciate that in other embodiments, such pairings need not be employed and it is conceivable that exposed infrared electromagnetic radiation sensors can be employed without corresponding blind thermal sensors.

The above examples have been described in respect of a single thermal sensor device. However, a thermal sensor array, for example a matrix arrangement, comprising a plurality of thermal sensor devices described herein can be formed.

In the above examples, the substrate layer 104 is a CMOS layer. However, it should be appreciated that in other examples, semiconductor device structures need not be formed in the substrate layer 104 to process either in part or completely electrical signal generated by the heat flux sensor(s). Additionally or alternatively, one or more metal pathways can be provided, formed from at least one layer of metal that is processed to form pathways, to route the electrical signal or signals from the heat flux sensor(s) towards output formations, for example bond pads, provided on the substrate layer 104. In this regard, the metal pathways can electrically connect a heat flux sensing pixel to the output formations. Where the substrate layer 104 comprises some amount of signal process processing circuitry that is electrically coupled to the heat flux pixel, the pathway or pathways can be coupled the optional signal processing circuitry provided to the output formation, for example at a surface of the substrate layer 104 facing the cap layer 102.

In other examples, the output formations can be provided on an opposite surface of the substrate layer 104 to the surface facing the cap layer 102, for example a backside of the substrate layer 104. In such examples, the pathway of pathways can be coupled to the output formations by through vias formed in the substrate layer 104, thereby transferring the electrical signal(s) through the substrate layer 104 to the backside of the substrate layer 104.

**Claims**

1. A heat flux sensor device comprising:

   a semiconductor substrate layer;
   a cap layer having a substrate-facing side and a reception side, the cap layer being bonded on the substrate-facing side thereof to the semiconductor substrate layer, and the semiconductor substrate layer and the cap layer together defining a first cavity;
   a first thermal sensor element disposed within the first cavity and configured to translate, when in use, thermal energy proportional to a temperature difference between the cap layer and the semiconductor substrate layer into first electrical energy; and
   signal processing circuitry operably coupled to the first thermal sensor element and configured to use the first electrical energy generated, when in use, by the first thermal sensor element to measure a heat flux flowing from the cap layer to the semiconductor substrate layer; wherein

the first cavity is opaque, when in use, to infrared electromagnetic radiation incident from the reception side of the cap layer.

2. A device as claimed in Claim 1, further comprising: a substrate temperature sensor operably coupled to the semiconductor substrate layer.

3. A device as claimed in Claim 1 or Claim 2, wherein the first thermal sensor element is disposed in a plane substantially parallel with the semiconductor substrate layer and the cap layer.

4. A thermal sensor device comprising:

the heat flux sensor device as claimed in Claim 1 or Claim 2 or Claim 3; wherein
the semiconductor substrate layer and the cap layer together define a second cavity; and further comprising:
a first infrared electromagnetic radiation sensor comprising the second cavity and a second thermal sensor element disposed in the second cavity, the second thermal sensor element being configured to translate thermal energy into second electrical energy.

5. A device as claimed in Claim 4, wherein the second cavity comprises an aperture located opposite the second thermal sensor element.

6. A device as claimed in Claim 4, wherein the second cavity is opaque, when in use, to infrared electromagnetic radiation incident from the reception side of the cap layer.

7. A device as claimed in Claim 5, wherein
the semiconductor substrate layer and the cap layer together define a third cavity; and the device further comprises:

a second infrared electromagnetic radiation sensor comprising the third cavity and a third thermal sensor element disposed in the third cavity, the third thermal sensor element being configured to translate thermal energy into third electrical energy; and
the third cavity is opaque, when in use, to infrared electromagnetic radiation incident from the reception side of the cap layer.

8. A device as claimed in Claim 6, wherein

the thermal energy is proportional to the temperature difference between the cap layer and the semiconductor substrate layer;
the second thermal sensor element is operably coupled to the signal processing circuitry; and
the signal processing circuitry is configured to use the second electrical energy generated by the second thermal sensor element, when in use, to measure the heat flux flowing from the cap layer to the semiconductor substrate layer.

9. A device as claimed in Claim 7, wherein

the thermal energy is proportional to the temperature difference between the cap layer and the semiconductor substrate layer;
the third thermal sensor element is operably coupled to the signal processing circuitry; and
the signal processing circuitry is configured to use the third electrical energy generated by the third thermal sensor element, when in use, to measure the heat flux flowing from the cap layer to the semiconductor substrate layer.

10. A device as claimed in any one of the preceding claims, wherein

the semiconductor substrate layer and the cap layer cooperate to define a hermetic local environment; and
the hermetic local environment is maintained at a predetermined pressure.

11. A device as claimed in Claim 10, wherein the first cavity is within and in fluid communication with the hermetic local environment.

**12.** A device as claimed in Claim 11, when dependent upon Claim 4, wherein the second cavity is within and in fluid communication with the hermetic local environment.

**13.** A device as claimed in Claim 4, wherein

the semiconductor substrate layer and the cap layer cooperate to define a first hermetic local environment and a second hermetic local environment, the first hermetic local environment being maintained at a first predetermined pressure and the second hermetic local environment being maintained at a second predetermined pressure;

the second hermetic local environment is separate and independent from the first hermetic local environment; the first cavity is within and in fluid communication with the first hermetic local environment; and the second cavity is within and in fluid communication with the second hermetic local environment.

**14.** A device as claimed in Claim 8, wherein

the heat flux sensor device and the first infrared electromagnetic radiation sensor are formed in accordance with a plurality of common structural constraints; and

a first value of a common structural constraint of the plurality of common structural constraints in respect of the heat flux sensor device is different from a second value of the same common structural constraint in respect of the first infrared electromagnetic radiation sensor.

**15.** A thermal sensor module comprising:

a package containing the thermal sensor device as claimed in Claim 4, wherein the package comprises a module cover opposite the reception side of the cap layer.

**16.** A module as claimed in Claim 15, further comprising:
a layer of thermal interface material disposed between the reception side of the cap layer and the module cover.

**17.** A thermal sensor module as claimed in Claim 16, wherein the layer of thermal interface material is transmissive to infrared electromagnetic radiation.

**18.** A module as claimed in Claim 16 or Claim 17, wherein the layer of thermal interface material comprises an access aperture opposite the first infrared electromagnetic radiation sensor.

**19.** A method of manufacturing a heat flux sensor device comprising:

providing a semiconductor substrate layer;

providing a cap layer having a substrate-facing side and a reception side;

forming a first thermal sensor element and a first recessed part of a first cavity in the semiconductor substrate layer, the first thermal sensor element being configured to translate, when in use, thermal energy proportional to a temperature difference between the cap layer and the semiconductor substrate layer into first electrical energy;

bonding the cap layer on the substrate-facing side thereof to the semiconductor substrate layer, the first recessed part of the first cavity in the semiconductor substrate layer and the cap layer together defining the first cavity containing the first thermal sensor element; and

providing signal processing circuitry operably coupled to the first thermal sensor element and configured to use the first electrical energy generated, when in use, by the first thermal sensor element to measure a heat flux flowing from the cap layer to the semiconductor substrate layer; wherein

the first cavity is opaque, when in use, to infrared electromagnetic radiation incident from the reception side of the cap layer.

*100*

116   118   112

*108*

*102*

*110*

120

106

*110*

122

*104*

*114*

# FIG. 1

*200*

*108*

*102*

126   128   124

*110*

110

106

130

*104*

# FIG. 2

FIG. 3

FIG. 4

FIG. 5

FIG. 6

FIG. 7

FIG. 8

Start

Provide bulk material ~900

Pattern and etch ~902

Deposit getter material ~904

Pattern and etch to form window ~906

Apply glass frit paste ~908

Provide bulk material ~910

Form optional CMOS devices ~911

Form beams and membranes ~912

Etch cavities ~914

Bring two processed wafers together ~916

Backfill chambers ~918

Heat ~920

Stop

*FIG. 9*

Start

Offer heat flux sensor up to sample under test ~930

Measure thermal energy applied to thermally conductive membrane ~932

Retrieve values for A and $R_{thgas}$ ~934

Calculate vertical heat flux ~936

Stop

## FIG. 10

700

702

704

300

$T_{core}$

$R_{skin}$

$T_{skin}$

$R_{airgap}$

$T_{cap}$

$R_{sensor}$

$T_{substrate}$

## FIG. 11

FIG. 12

FIG. 13

FIG. 14

EP 4 407 286 A1

*FIG. 15*

FIG. 16

**EP 4 407 286 A1**

Europäisches
Patentamt

European
Patent Office

Office européen
des brevets

# EUROPEAN SEARCH REPORT

Application Number

EP 24 17 9474

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/047601 A1 (WANG CHEIN-HSUN [TW] ET AL) 16 February 2023 (2023-02-16) * paragraphs [0053], [0054], [0095]; figures 3B, 4 * | 1-19 | INV. G01J5/00 G01J5/04 G01J5/12 G01K13/20 G01K7/42 |
| X | EP 3 026 406 A1 (MELEXIS TECHNOLOGIES NV [BE]) 1 June 2016 (2016-06-01) * paragraphs [0047], [0053]; figures 1-3 * | 1-19 | |
| X | US 2017/016762 A1 (VAN BUGGENHOUT CARL [BE] ET AL) 19 January 2017 (2017-01-19) * paragraphs [0035], [0064]; figure 1 * | 1-19 | |
| A | US 2017/343421 A1 (NAKAGAWA SHINYA [JP]) 30 November 2017 (2017-11-30) * the whole document * | 1-19 | |

TECHNICAL FIELDS
SEARCHED      (IPC)

G01J
G01K

The present search report has been drawn up for all claims

| Place of search | Date of completion of the search | Examiner |
|---|---|---|
| Munich | 25 June 2024 | Haan, Martine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

31

## ANNEX TO THE EUROPEAN SEARCH REPORT
## ON EUROPEAN PATENT APPLICATION NO.

EP 24 17 9474

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2024

| Patent document cited in search report | | Publication date | Patent family member(s) | | Publication date |
|---|---|---|---|---|---|
| US 2023047601 | A1 | 16-02-2023 | TW | M626878 U | 11-05-2022 |
| | | | US | 2023047601 A1 | 16-02-2023 |
| EP 3026406 | A1 | 01-06-2016 | EP | 3026406 A1 | 01-06-2016 |
| | | | GB | 2532733 A | 01-06-2016 |
| | | | US | 2016149105 A1 | 26-05-2016 |
| US 2017016762 | A1 | 19-01-2017 | EP | 3118594 A1 | 18-01-2017 |
| | | | EP | 4006510 A1 | 01-06-2022 |
| | | | US | 2017016762 A1 | 19-01-2017 |
| US 2017343421 | A1 | 30-11-2017 | CN | 107250746 A | 13-10-2017 |
| | | | DE | 112016001177 T5 | 14-12-2017 |
| | | | JP | 6398807 B2 | 03-10-2018 |
| | | | JP | 2016170014 A | 23-09-2016 |
| | | | US | 2017343421 A1 | 30-11-2017 |
| | | | WO | 2016143518 A1 | 15-09-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2023066222 A1